(19) Europäisches Patentamt
European Patent Office
Office européen des brevets

(11) **EP 4 180 790 A1**

(12) **EUROPEAN PATENT APPLICATION**

(43) Date of publication:
**17.05.2023  Bulletin 2023/20**

(21) Application number: **22214376.0**

(22) Date of filing: **01.11.2018**

(51) International Patent Classification (IPC):
**G01M 3/00** (2006.01)    **G01M 3/28** (2006.01)
**G01F 1/68** (2006.01)    **G01F 1/684** (2006.01)

(52) Cooperative Patent Classification (CPC):
**G01M 3/002; G01F 1/68; G01F 1/6847; G01M 3/2807**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2017  GB 201718166**

(62) Document number(s) of the earlier application(s) in accordance with Art. 76 EPC:
**18800287.7 / 3 704 458**

(71) Applicant: **Invenio Systems Ltd**
**Durham DH1 1TW (GB)**

(72) Inventors:
• **TOOMS, Stephen**
  **DURHAM, DH1 1TW (GB)**
• **TROW, Stuart**
  **DURHAM, DH1 1TW (GB)**

(74) Representative: **Murgitroyd & Company**
**Murgitroyd House**
**165-169 Scotland Street**
**Glasgow G5 8PL (GB)**

Remarks:
This application was filed on 16-12-2022 as a divisional application to the application mentioned under INID code 62.

(54) **IDENTIFYING ANOMALOUS FLOWS IN A WATER DISTRIBUTION NETWORK**

(57)     Methods (200, 230) for localising a cause of anomalous water flow in a water distribution network are disclosed. One method (200) comprises installing (210) temperature logging apparatus at upstream and downstream ends of a section of water main of the network, measuring (214) the temperature of water at the upstream and downstream ends of each section and storing the water temperature data, determining (212) the temperature of the ground surrounding the water main at the upstream and downstream ends and storing the ground temperature data, and processing (218) the water temperature data and the ground temperature data to determine whether a section includes a cause of anomalous water flow. Another method (230) comprises estimating (232) an expected water flow rate along a section, calculating (240) an actual water flow rate along the section from measurements (236) of the temperature of water within each section and measurements (234) of the temperature of the ground surrounding the section, determining an anomalous flow rate (242) from the expected flow rate and the calculated actual water flow rate; determining (244) a lower bound for the anomalous flow rate; and comparing the lower bound for the anomalous flow rate with a threshold value of flow rate to determine (246) whether the section includes anomalous water flow. An installation (300) for localising a cause of anomalous water flow in a water distribution network is also disclosed.

FIG.2

**Description**

The present invention relates to apparatus, systems and methods for identifying the location of anomalous flows in a water distribution network.

In a water distribution network various anomalies in the flow of water within the network may arise for a variety of reasons such as damage to the network and/or anomalous and/or illicit use or operation of parts of the network. Water distribution networks can be complex and can extend over a large area and so it can be difficult and/or very time consuming to try and identify the source of the cause of the anomalous water flow.

Step testing is one approach that can be used to try and reduce the search area. Step testing consists of monitoring a meter that records flow into a zone of the water distribution network within which the anomaly is located while progressively shutting off water supply to sections of the network. If the rate of flow of water through the meter reduces after a section of the water mains is shut off, by more than the expected reduction due to customer consumption, then this indicates that the anomalous flow was due to an anomaly within that section.

However, there are several problems associated with step tests.

The present invention provides various apparatus, systems, installations and methods that can be used to reduce the search area for an anomaly within a water distribution network that is causing an anomalous flow.

The present invention may provide one or more of the following benefits amongst others. The expense of step tests being carried out at night can be reduced or avoided. The health and safety risks of step tests, particularly if the step tests are carried out at night, can be reduced or avoided. The risks reduced or avoided may include: personal safety (including risk of assault and theft); traffic accidents and injury from manual handling of valve keys or chamber lids. The risks of valve operations causing water discolouration can be reduced or avoided. The risk of valve operation causing pressure transients or higher pressure leading to bursts can be reduced or avoided. The risk of broken valves, leading to loss of supply and valve repair work, can be reduced or avoided. The risk of accidentally leaving valves open or closed after the test, leading to loss of supply or low pressure, can be reduced or avoided.

The invention can be used in areas where step tests are not practicable due to unacceptable risks or where the valves required for step tests are not operable.

The invention can be used to reduce the search area to a smaller area than is possible by a step test. This reduces the time and difficulty of searching for the cause of the anomalous flow within the search area. In distribution networks consisting mostly of materials with poor noise transmission (such as polyethylene) this can allow leaks to be pinpointed and repaired that could not otherwise be pinpointed and repaired.

Further, benefits and advantages of the invention may include the following. The ability to locate leaks in a pressurised water distribution network which can be difficult or impossible to locate within a distribution network by existing leak location methods. The ability to locate unusually high consumption by a particular customer, or consumption by unknown consumers. The ability to locate unknown open boundary valves (through which water may flow) between different zones and which can be difficult or impossible to locate by existing methods. In these, and other, cases there is some additional anomalous component of flow in the section of water main supplying the area of the network in which the source or cause of the anomaly occurs. The task of pinpointing the location of the cause or source of the water flow anomaly can be made easier by reducing the area of the network in which the search for the cause or source of the anomaly has to take place (i.e. reducing the search area).

According to a first aspect of the invention there is provided a method for localising a cause of anomalous water flow in a water distribution network. The method may comprise: installing temperature logging apparatus at an upstream end and a downstream end of at least one section of water main of the water distribution network; directly or indirectly measuring the temperature of water in the section of water main at the upstream end and the downstream end of each section of water main and storing measured water temperature data for each section of water main; determining the temperature of the ground surrounding the water main at the upstream end and the downstream end of each section of water main and storing ground temperature data for each section of water main; and processing the measured water temperature data and the ground temperature data to determine whether each section of water main includes a cause of anomalous water flow.

The determining of the temperature of the ground may comprise calculating the temperature from a combination of recent records of weather conditions, or it may comprise measuring the temperature directly.

The temperature logging apparatus may include ground temperature logging apparatus comprising a first temperature sensor and/or a first data logger. The first temperature sensor may be in thermal communication with the ground at the same depth as the water main.

The ground temperature logging apparatus may be provided in one or more respective boundary boxes.

The temperature logging apparatus may include mains water temperature logging apparatus comprising a second temperature sensor and/or a second data logger. The second temperature sensor may be provided in thermal communication with the mains side of a supply pipe connected to the section of water main or a stop tap of the supply pipe.

The temperature logging apparatus may include mains water temperature logging apparatus comprising a second temperature sensor and/or a second data logger. The second temperature sensor may be provided in thermal communication with an exterior part or fitting of the section of water main.

The temperature logging apparatus may include mains water temperature logging apparatus comprising a second temperature sensor and/or a second data logger. The second temperature sensor may be provided inside the section of water main.

The first sensor may have first thermal insulation arranged to thermally insulate the first sensor from a first adjacent air space.

The second sensor may have second thermal insulation arranged to thermally insulate the second sensor from a second adjacent air space.

The method may further comprise: downloading the ground temperature data and/or the measured water temperature data from the temperature logging apparatus and/or processing the measured water temperature data and/or the measured ground temperature at a remote data processing device.

The method may further comprise: transmitting the ground temperature data and/or the measured water temperature data from the temperature logging apparatus to a remote data processing device and/or processing the measured water temperature data and/or the measured ground temperature at the remote data processing device.

The ground temperature data and/or the measured water temperature data may be wirelessly transmitted.

Separate ground temperature logging apparatus may be installed for each of a plurality of consumers of water attached to the upstream end. The temperature of the ground surrounding the water main at the upstream end may be separately measured and/or ground temperature data may be stored for each of the plurality of consumers.

Separate ground temperature logging apparatus may be installed for each of a plurality of consumers of water attached to the downstream end. The temperature of the ground surrounding the water main at the downstream end may be separately measured and/or ground temperature data may be stored for each of the plurality of consumers.

Separate mains water temperature logging apparatus may be installed for each of a plurality of consumers of water attached to the upstream end. The temperature of the mains water at the upstream end may be separately measured and/or measured water temperature data may be stored for each of the plurality of consumers.

Separate mains water temperature logging apparatus may be installed for each of a plurality of consumers of water attached to the downstream end. The mains water at the downstream end may be separately measured and/or measured water temperature data may be stored for each of the plurality of consumers.

Water temperature data and/or ground temperature data may be determined and/or stored during a logging period.

The logging period may have a duration of between 1 day and 7 days.

The logging period may include a least one flow period or a plurality of flow periods.

The or each flow period may have a duration of between 5 minutes and 1 hour.

The mains water temperature and/or the ground temperature may be measured at regular intervals of between 10s and 60s.

The water distribution network may include a plurality of sections of water main.

The or each section of water main may have between 1 and 100 consumers of water connected at the downstream end.

The or each section of water main may have a plurality of consumers of water connected at the downstream end

The or each section of water main may have a length of between 5m and 5000m. The or each section of water main may have a length of between 100m and 5000m. The or each section of water main may have a length of between 1000m and 5000m.

The temperature logging apparatus may be used to measure the temperature of water and the temperature of the ground for only a single logging period to provide a temporary survey of the section of water main.

The temperature logging apparatus may be removed after the logging period has finished or after a plurality of logging periods have finished.

The temperature logging apparatus may be used to measure the temperature of water and the temperature of the ground for a plurality of logging periods to provide a monitoring method for the section of water main. The temperature logging apparatus may be left installed between individual logging periods.

According to a second aspect of the invention there is provided an installation for localising a cause of anomalous water flow in a water distribution network. The installation may comprise: at least one section of water main of the water distribution network; upstream temperature logging apparatus arranged to measure and record the temperature of the water in the section of water main at an upstream end of the section and to measure and record the temperature of the ground surrounding the upstream end of the section water of water main; and downstream temperature logging apparatus arranged to measure and record the temperature of the water in the section of water main at a downstream end of the section and to measure and record the temperature of the ground surrounding the downstream end of the section of water main.

The installation may comprise a plurality of sections of water main of the water distribution network. Upstream temperature logging apparatus may be provided for the upstream end of each section and/or downstream temperature logging apparatus may be provided for the downstream end of each section.

A part of the upstream temperature logging apparatus arranged to measure and/or record the temperature of the ground surrounding the upstream end of the section of water main may be provided in a boundary box, and/or a part of the downstream temperature logging apparatus arranged to measure and/or record the temperature of the ground surrounding the downstream end of the section of water main may be provided in a boundary box.

A part of the upstream temperature logging apparatus arranged to measure and record the temperature of the water in the section of water main at an upstream end of the section is provided in a boundary box and a part of the downstream temperature logging apparatus arranged to measure and record the temperature of the water in the section of water main at the downstream end of the section is provided in a boundary box.

A plurality of water consumers may be connected to the upstream end of each section of water main and upstream temperature logging apparatus may be provided for each of the plurality of consumers.

A plurality of water consumers may be connected to the downstream end of each section of water main and downstream temperature logging apparatus may be provided for each of the plurality of consumers.

Each temperature logging apparatus may be further configured to export recorded measured water temperature data and/or ground temperature data and/or timing data for processing by a remote data processing device.

Each temperature logging apparatus may include a first temperature sensor in thermal communication with the ground at the depth of the section of water main.

Each temperature logging apparatus may include a second temperature sensor in thermal communication with: a supply pipe attached to the section of water main; a stop tap of a supply pipe attached to the section of water main; a part of the section of water main; the interior of the section of water main.

According to a third aspect of the invention there is provided a method for localising a cause of anomalous water flow in a water distribution network having at least one section of water main. The method may comprise: estimating an expected water flow rate along the or each section of water main; calculating an actual water flow rate along the or each section of water main from measurements of the temperature of water within the or each section of water main and measurements of the temperature of the ground surrounding the or each section of water main; determining an anomalous flow rate from the expected flow rate and the calculated actual water flow rate for the or each section; determining a lower bound for the anomalous flow rate for the or each section; and for each section, comparing the lower bound for the anomalous flow rate with a threshold value of flow rate to determine whether the section includes anomalous water flow or not.

The method may further comprise: identifying a reduced search area for the cause of anomalous water flow in a water distribution network based on the or each section determined to include anomalous water flow.

Estimating an expected water flow rate along the or each section of water main may include summing the expected water flow rate for each of a plurality of water consumers connected to each section of water main.

The actual water flow rate for each section may be calculated using

$$\frac{-2.\pi.\alpha.l}{\ln(R).\ln(\frac{4z}{d})}$$

where

$$R = \frac{(T_2 - T_g)}{(T_1 - T_g)},$$

and wherein $T_1$ is the upstream mains water temperature for the section, wherein $T_2$ is the downstream mains water temperature for the section, wherein $T_g$ is the downstream ground temperature for the section, l is the length of the section, $\alpha$ is the thermal diffusivity of the ground, z is the depth of the section and d is the diameter of the section.

The anomalous flow rate may be determined from the difference between the calculated actual flow rate and the estimated flow rate.

The method may further comprise determining an upper bound for the anomalous flow rate.

Determining whether a section has an anomalous flow or not may include: determining whether the upper bound and lower bound for the anomalous flow rate both have the same sign; and/or determining whether the upper bound and the lower bound for the anomalous flow are both greater than the threshold value of flow rate.

Identifying a reduced search area may further comprise: identifying the most downstream section that has been identified as including anomalous water flow; recording the start of the reduced search area as being downstream of the upstream end of the most downstream section including anomalous flow; identifying the next section which is downstream of the most downstream section including anomalous flow and that has been identified as not including anomalous water flow; and recording the end of the reduced search area as being upstream of the downstream end of the next section.

The method may further comprise assigning a confidence score to each reduced search area identified.

The method may further comprise increasing the confidence score for a reduced search area for each upstream section identified as having anomalous flow.

According to a fourth aspect of the invention there is provided a computer readable medium storing computer program code executable by a data processor to carry out the method of the third aspect of the invention.

According to a fifth aspect of the invention there is provided a data processing device including a data processor and the computer readable medium of the fourth aspect of the invention.

Other aspects of the invention may also include a method for localising a cause of anomalous water flow in a water distribution network combining features of the first aspect of the invention and features of the third aspect of the invention.

A hydraulic model of a water distribution system, where pipe characteristics and expected customer demands at each node in the distribution system are known, may be used to identify at least one of the following: (i) upstream and downstream ends of at least one section of water main; (ii) an expected demand at each end of at least one section of water main; (iii) an expected flow rate along at least one section of water main; and (iv) an expected flow direction in at least one section of water main.

Embodiments of the invention will now be described in detail, by way of example only, and with reference to the accompanying drawings, in which:

Figure 1 shows a flow chart illustrating a method of the invention at a high level;

Figure 2 shows a flow chart illustrating the method of Figure 1 in greater detail;

Figure 3 shows a schematic diagram of a water distribution network to which the method can be applied and being an installation according to an aspect of the invention;

Figure 4 shows a schematic cross sectional diagram of a first embodiment of temperature logging apparatus installed at a part of the network illustrated in Figure 3;

Figure 5 shows a process flow chart illustrating a data processing method which may be applied to measured temperature data from the network illustrated in Figure 3;

Figure 6 shows a schematic cross sectional diagram of a second embodiment of temperature logging apparatus installed at a part of the network illustrated in Figure 3;

Figure 7 shows a schematic cross sectional diagram of a third embodiment of temperature logging apparatus installed at a part of the network illustrated in Figure 3;

Figure 8 shows a schematic view of a simplest water distribution network illustrating an installation of the invention and also the method of the invention;

Figure 9 shows a graph illustrating measured mains water temperature data and measured ground temperature for multiple water consumers at an upstream part of the network shown in Figure 8;

Figure 10 shows a graph illustrating measured mains water temperature data and measured ground temperature for multiple water consumers at a downstream part of the network shown in Figure 8;

Figure 11 shows a graph illustrating a weighted average measured mains water temperature at an upstream part and a downstream part of the network shown in Figure 8;

Figure 12 shows the schematic view of a simplest water distribution network of Figure 8 and illustrating a reduced search area determined using the method and apparatus of the invention;

Figure 13 shows a schematic view of a further water distribution network illustrating an installation of the invention and a first example use scenario for the invention;

Figures 14A to 14C show graphs illustrating various measured and calculated values at different positions along the further water distribution network illustrated in Figure 13;

Figure 15 shows a schematic view of the further water distribution network shown in Figure 13 illustrating a second example use scenario for the invention and a graph illustrating various calculated values at different positions along the further water distribution network; and

Figure 16 shows a schematic view of the further water distribution network shown in Figure 13 illustrating a third example use scenario for the invention and a graph illustrating various calculated values at different positions along the further water distribution network.

In the following like items in the different Figures share common reference numerals unless indicated otherwise.

The term "main" or "water main" will generally be used to refer to any one of the principal pipes or conduits running under streets, to which the service pipes for supply of water household or non-household customers on either side are connected. The term "service pipe" will be used to refer to a pipe from the main to the point of customer consumption. The term "boundary box" will be used to refer to a small chamber close to the boundary of a customer property containing a stop tap attached to a service pipe, and which may also contain a customer meter. While this terminology is particularly appropriate to the United Kingdom, other terminology may be used in other countries to refer to substantially the same features of a water distribution network as will be understood by a person of ordinary skill in the art in any particular country.

By way of background, the temperature of water in a water distribution network varies as it travels through the network. One of the main mechanisms for this is believed to be the conduction of heat energy between the water in the main and the ground surrounding the main. If water is moving slowly along a buried pipe then the temperature of water at a certain distance along the pipe will be closer to the ground temperature than the water in the same pipe would be if it was moving at a higher rate. The rate of change of temperature of the water as it travels along a pipe can be calculated from ground temperature, pipe parameters and parameters describing the thermal characteristics of the ground surrounding the pipe. Therefore the flow rate in each section of main can be calculated using these parameters and the change of water temperature from one end to the other in each section of the main.

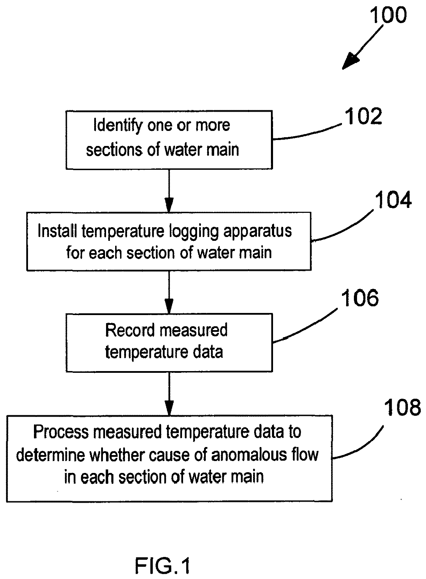

Figure 1 shows a process flow chart giving an overview of a method 100 for surveying a water distribution network to locate a water main including a source of anomalous water flow.

In the method 100, an initial search area, within which the cause of the anomalous flow is thought to lie, is divided into one or more sections of main 102. The expected flow rate of water along each section of main is estimated. Temperature measurement and logging apparatus is then installed 104 for each section of water main so as to allow the temperature of the water main and/or the ground temperature local to the water main to be measured and recorded at 106. The recorded temperature data is then processed at 108 to determine which sections of water main appear to include a source or cause of the anomalous water flow.

For example, the flow rate of water along the section of main may be calculated from the change in water temperature within the main from one end of the section to the other. If the difference between the calculated flow rate of water along the main and the expected flow rate is greater than the uncertainty in the difference between the calculated and expected flow rate by an amount greater than a minimum anomalous flow of interest, this indicates that there is an anomalous flow along that section of main. This indicates that the source of the anomaly is in the area that is expected to be supplied through that section of main and hence reduces the search area for the anomaly from the initial search area.

The analysis may be repeated for sections of main that are connected to each other so that the search area for the anomaly can be further reduced. The result is a reduced search area and may also include a confidence score for the reduced search area.

The temperature of the water in the main and of the ground around it can be derived from direct measurements or derived from measurements at accessible points on service pipes or the outside of the water mains.

By continuously monitoring the temperature of the water and the ground around it (from direct measurement or derived from measurements) at the ends of a section of main the start or end of an anomalous flow can be identified by repeating the method at regular intervals, or continuously, or when the recorded flow rate of water through a meter supplying the area shows a sudden increase.

Three different embodiments of the method of the invention and apparatus and installations used in the methods are described below. Each of the three methods can be carried out at several flow periods within a longer logging period. The main difference between the embodiments of the methods is in the way in which the temperature of the ground around the main and the temperature of the water in the main are determined.

A first embodiment of the invention will now be described. In this first embodiment stop-tap temperatures and ground temperatures measured at stop-taps are used.

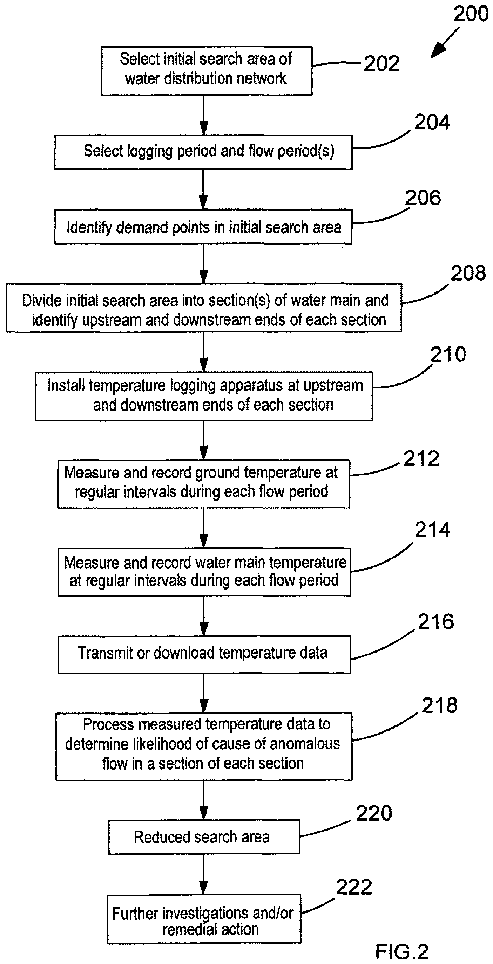

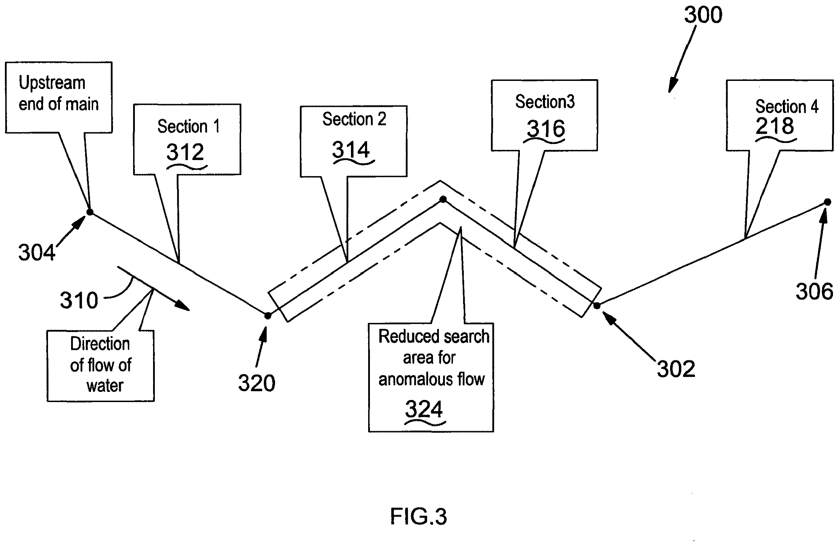

Figure 2 shows a more detailed flow chart illustrating a method 200 for locating the cause or source of anomalous water flow in a water distribution network. At 202 an initial search area of the water distribution network is identified. For example, Figure 3 illustrates a schematic block diagram of a part 300 of a water distribution network in the form of a length of water main 302. The initial search area extends from an upstream end 304 of the water main 302 to a downstream end 306 of the water main. The direction of water flow is indicated by arrow 310.

The initial search area may have previously been identified by comparing the metered flow rate, at a meter in the water main, into the length of water main, at a certain time of day, to the expected flow rate into the same length of water main, and finding that the metered flow rate exceeds the expected flow rate by an amount that is worth the effort to locate. The expected flow rate into the length of water main can be determined from the sum of the expected flow rates, at that time of day, for the types of properties connected to the length of water main.

At 204, a logging period is selected and one or more flow periods during that logging period. For example, the logging period may be between 24 hours and seven days, and each flow period may last for between five minutes and one hour within the logging period. The method may permit a reduced search area to be identified for each one of the flow periods during the overall logging period.

At 206 all the points along the network 302 in the initial search area where demand may be expected to take place (usually due to customer connections) are identified. These allow the expected demand from each point to be calculated subsequently for each flow period during the planned logging period and during which temperature logging is expected to take place.

At 208 the initial search area 302 is divided into sections of main, e.g. sections 312, 314, 316 and 318 in Figure 3. The sections can be determined based on their length and/or the amount of demand associated with each section. For example, each section of water main may have a length less than 5km and the number of properties connected at the downstream end of the section of water main may be between 1 and 100 properties. The upstream end and downstream end of each section of water main are identified. It will be appreciated that the downstream end of one section of water main 312, e.g. 320, will be the upstream end of the next section of water main 314.

The method 200 may be applied to initial search area lengths of water main 302 of several km with groups of neighbouring properties along the water main, and each group of neighbouring properties being close to the end of a section of main. The method may also be applied to a single length or short lengths of water main (for example a few metres or a few tens of metres) between properties in an urban or suburban area, where the section of main is just the piece of main between one service connection and the next. The method may also be applied to intermediate situations between these two extremes

At 210 temperature logging apparatus are installed at the upstream end and downstream end of each section of water main. Hence, in Figure 3, five sets of temperature logging apparatus are installed. As will be appreciated, the same temperature logging apparatus installed at location 320 can serve as the downstream temperature logging apparatus for the first section 312 and also the upstream temperature logging apparatus for the second section of water main 314.

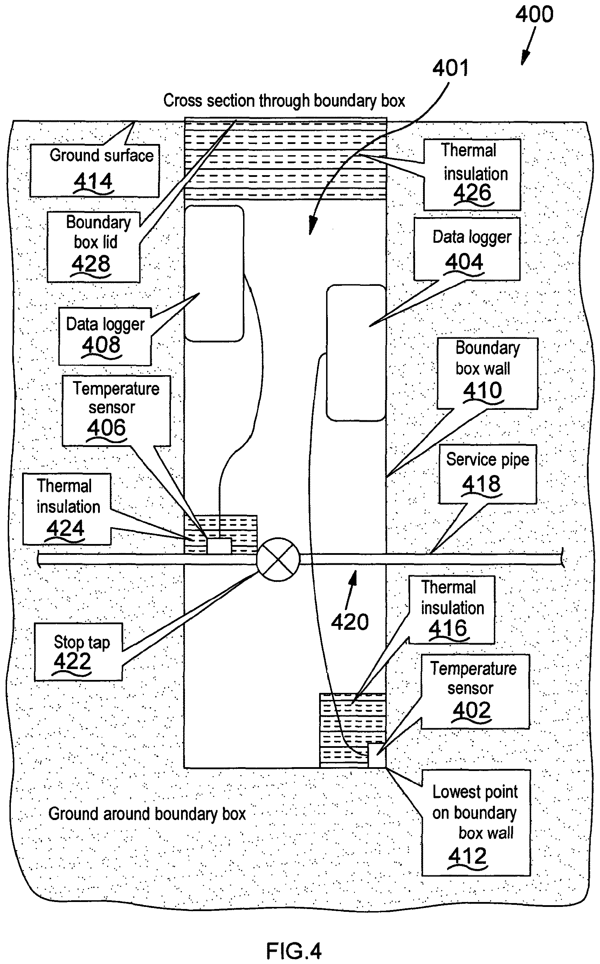

Figure 4 shows a schematic cross sectional block diagram 400 illustrating an instance of the temperature logging apparatus and how it is arranged within a boundary box 401. The temperature logging apparatus 400 includes apparatus for measuring and recording the temperature of the ground and also the water main.

The temperature logging apparatus 400 includes a first temperature sensor 402, attached to a first data logger 404 configured to record the measure temperature at regular intervals. The data logger 404 may also be attached to or include a data transmitter that sends the data to a computer for analysis. Alternatively the data from the data logger may be downloaded and transferred to a computer for analysis. The temperature logging apparatus 400 also includes a second temperature sensor 406, attached to a second data logger 408 configured to records temperature at regular intervals. The second data logger 408 may also be attached to or include a data transmitter that sends the data to a computer for analysis. Alternatively the data from the second data logger may be downloaded and transferred to a computer for analysis.

The first temperature sensor 402 is attached to the wall 410 of the boundary box 401 at the lowest accessible point 412 within the boundary box and preferably at a minimum depth from the ground surface 414 of 500mm. If the lowest accessible point is at a lesser depth then an alternative boundary box can be selected. The first temperature sensor may be surrounded by thermally insulating material 416 so that the local ground temperature may be more accurately measured. The second temperature sensor 406 is mounted in thermal communication with the mains side 416 of the service pipe 418 extending from the water main (not shown) and to a consumer side 420 via a stop tap 422. The second temperature sensor 406 is insulated from the temperature of the air in the boundary box by thermally insulating material 424. Further thermal insulating material 426 is provided below the boundary box lid 428.

At 212 the ground temperature is measured and recorded using the temperature logging apparatus at the upstream and downstream end of each section of water main. In particular the instantaneous temperature of the boundary box wall is measured and recorded at regular intervals, for example at intervals in the range of between 10 and 60 seconds, at the lowest point in the boundary box for each of a group of one to ten properties at the ends of each section throughout the whole logging period.

At 214 the mains water temperature is measured and recorded using the temperature logging apparatus 400. In particular, the temperature of the mains side of the supply pipe or the stop-tap within the boundary box is measured and recorded at regular intervals of between 10 and 60 seconds for each of a group of one to ten properties at the start and end of each section of water main and over the logging period. This is the same group of properties as used in step 212 above. This measured temperature data can then be processed to assess the temperature of the water in the water main at each end of the section as a function of time.

After the measured ground temperature and measured mains water temperature data has been collected for the duration of logging period, then at 216, the measured temperature data and related time data may be downloaded from all the data loggers at 216 for subsequent processing at 218. In other embodiments, the measured temperature data and related time data may be transmitted from all the data loggers during the logging period to a local or remote computer for subsequent processing at 218.

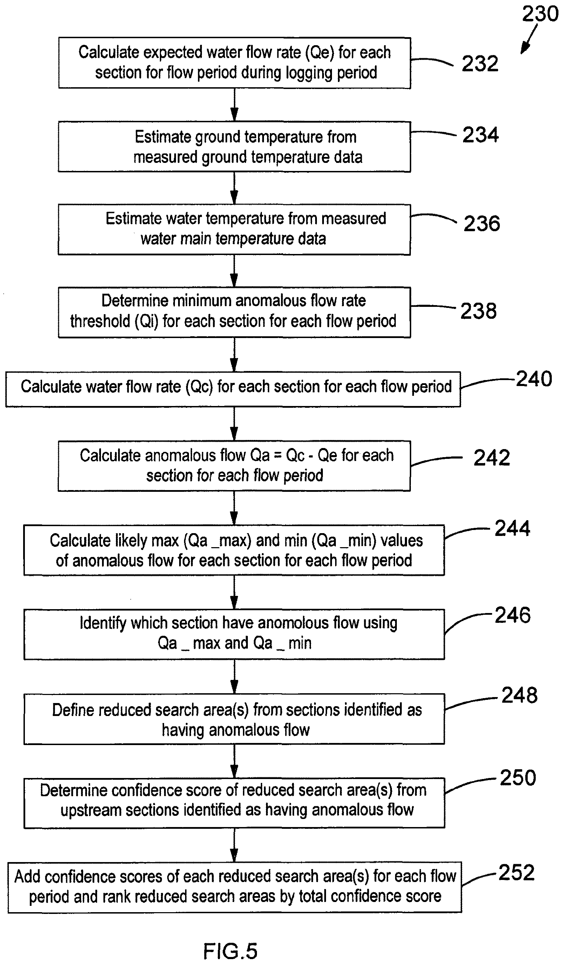

At 218, the measured temperature data as a function of time is processed in order to try and reduce the initial search area by identifying those sections of water main in which one or more causes of anomalous water flow may be located. This will be described in greater detail with reference to Figure 5. The output of step 218 may be a reduced search area, e.g. reduced search area 324 comprising water main sections 314 and 316, as illustrated in Figure 3.

Once the reduced search area has been identified at 220, then further investigations may be carried out at 222 to identify or pinpoint the precise location of the source or cause of the anomalous water flow. This can be done in a variety of ways.

For example, to detect a leak causing the flow anomaly, acoustic methods may be used to detect the sound from the water escaping from the pressurised water main at the leak and the amplitude of the detected sound may be used to identify the location. Equipment to detect the sound may include a listening stick, an electronically amplified listening stick or acoustic noise logger applied on mains fittings, such as hydrants and sluice valves, or external stop taps or on the surface. Leak noise correlation may also be used, based on the time difference between the arrival of similar vibration signals travelling in both directions down a main to a pair of acoustic detectors on either side of the leak location.

To identify a customer responsible for unexpected customer consumption as the cause of the flow anomaly, customer connections may be metered and the flow through them logged at regular intervals and the recorded flow rate compared to the expected flow for that customer or type of customer.

To detect an unknown connection causing the anomalous flow, a drop test may be used. The pressure in a section of main is monitored at a hydrant or washout while the known supply to that section is shut off. If the pressure does not go to zero, then this indicates that there is another connection providing water supply to that section. Alternatively valves on the main that are thought to be shut may be opened while listening (with a listening stick) to the sound of water moving between the valve seat and the valve as it is first opened. If the sound is not present, then that would indicate that the valve is already open, or not seated properly, or corroded through, and is hence providing a connection to another zone.

Additionally and/or alternatively remedial action may be taken to reduce or stop the anomalous water flow or the existence of the anomalous flow may simply be recorded.

The remedial action may vary depending on the nature of the cause of the anomalous flow. For example, for a leak, excavation to the pipe (main or service pipe) and renewal of a section of the pipe, or repair using a repair collar that goes round the pipe covering the hole in the pipe causing the leak, may be carried out. For a previously unknown connection, the remedial action may include replacement of a valve on the main that will not properly close, or shutting a valve that was previously thought to be already shut or cutting a new valve into an existing main and shutting that new valve or cutting and capping a main to permanently remove the connection or recording that the connection exists and revising records of expected flows along the main. For an unexpected customer demand, the remedial action may be to revise the expected demand for that customer or to advise the customer on how to reduce their demand.

Hence, the method, apparatus and installations of the invention may allow the location of a source or cause of anomalous water flow to be identified simply from temperature measurements on parts of the water main and without requiring access to any customer or consumer parts of the water supply network.

Figure 5 shows a process flow chart illustrating a data processing method 230 according to an aspect of the invention and corresponding generally to step 218 of method 200. Some or all of data processing method 230 may be implemented by a suitable computer program running on a data processing device or general purpose computer including at least one processor and at least one storage device storing computer executable code.

At 232, for each section of water main and each flow period, the expected flow rate (Qe) along the section of the distribution network due to the expected demands during the flow period is calculated by adding up the expected demand of the customers served through each section as identified previously at 206.

At 234 the ground temperature, $T_g$, is estimated for each 24 hour period within the logging period. The ground temperature can be estimated from the ground temperature data in the following manner. The median value of the wall temperature (which was recorded at intervals of between 10 and 60 seconds at 212) is calculated for each whole hour and for each of the boundary boxes at both ends of each section of water main for each 24 hour period in the logging period. The mean of these (24 x number of boundary boxes monitored) median values is calculated and is the estimated ground temperature in that section of main for each 24 hour period in the logging period.

At 236 the temperature of the water in the section of water main is estimated from the measured water main temperature for each stop tap as follows.

(i) Every three hours in the logging period, the minimum and maximum measured stop tap temperature within that 3 hour period is recorded (from the temperatures measured at 10 to 60s time steps at 214), giving 8 minimum values and 8 maximum values for each 24 hour period within the logging period.

(ii) Also at 236, for every 3 hours in the logging period, the average stop tap temperature is calculated, giving 8 average values in each 24 hour period within the logging period.

(iii) Then, for each 3 hour period, the difference between the minimum and the average temperature and the difference between the average and the maximum (all being positive values) are calculated.

(iv) If the difference between the minimum and the average temperature is greater than the difference between the average and the maximum for the three hour period then each time step in that three hour period is stepped through to identify the minimum temperature values within that three hour period. If the absolute difference between the minimum temperature value and the temperature ten minutes before the minimum value is more than 0.1 degrees Celsius, then that minimum temperature is recorded as the estimate of the water temperature at the time of that minimum temperature.

(v) Alternatively if the difference between the maximum and the average temperature is greater than the difference between the average and the maximum for the three hour period then each time step in that three hour time period is stepped through to identify the maximum temperature values within that three hour period. If the absolute difference between the maximum temperature value and the temperature ten minutes before the maximum value is more than 0.1 degrees then the maximum temperature is recorded as the estimate of the water temperature at the time of that maximum temperature.

(vi) Then steps (i) to (v) are repeated for each of the monitored stop taps to produce a set of estimates of water temperature at a set of individual times throughout the logging period.

(vii) Then a weighted average water temperature is calculated at each time step (e.g. at 10 or 60 second steps) through the logging period, where the weighted average temperature at a time step is weighted by the reciprocal of the time difference between the time step midpoint and the time of the estimate of the water temperatures from (iv) or (v) above.

At 238, a minimum anomalous flow rate threshold or minimum anomalous flow rate of interest (Qi) is determined or set for each section of water main and each flow period. The minimum anomalous flow rate of interest (Qi) may be determined or set by the user of the system. For example the minimum flow rate of interest (Qi) may be set, by the user, as a proportion (such as 10%) of the flow rate of an anomalous flow that has been identified from meter data entering an area that includes the sections of water main. Alternatively, the minimum flow rate of interest may be set as the smallest leak flow rate that it is economic to repair. Other conditions and corresponding values of Qi may also be used.
At 240, water flow rate (Qc) in each section of water main is calculated from the estimated water temperatures and other parameters for each flow period. The water flow rate may be calculated using the following equations which relate spatial change in water temperature along a section of water main and flow rate within the water main.
If a water main has length l, internal diameter d, depth of burial z, and thermal diffusivity $\alpha$ then, to a first approximation, the flow rate (q) in the water main can be estimated as:

$$q \approx \frac{-2.\pi.\alpha.l}{\ln(R).\ln(\frac{4z}{d})} \qquad \text{(Equation 1)}$$

Or

$$R = e^{\left(\frac{-2\pi\alpha l}{q.\ln\left(\frac{4z}{d}\right)}\right)} \qquad \text{(Equation 2)}$$

Where:

$$R = \frac{(T_2 - T_g)}{(T_1 - T_g)} \qquad \text{(Equation 3)}$$

and Tg is the temperature that the ground adjacent to the pipe returns to when there is no flow in the water main (as estimated at step 234), T1 is the water temperature in the water main at the upstream end of the section of water main, and T2 is the water temperature in the water main at the downstream end of the section of water main.

The length of a section of water main and water main pipe internal diameter can be obtained from record drawings of the distribution network. The depth of burial can be obtained from local standards for depth of burial or from measurements at accessible points. The uncertainty in these values can be estimated from the quality and known reliability of the records and the range in the values of the measurements made.

Values for thermal diffusivity in water mains in general can be obtained from measurements of water temperature and ground temperature along many sections of water main with known flow rate, length, depth of burial and internal diameter. By re-arranging Equation 1, values for thermal diffusivity ($\alpha$) can be obtained knowing the other parameters. The values for $\alpha$ derived from at least 50 of these measurements in different mains can be used to calculate the mean value and the standard deviation in the values.

Alternatively values for thermal diffusivity, and the range of these values, can be obtained from published sources for a variety of materials and soil types. These can be used to produce an estimate of the effective thermal diffusivity for the pipe and soil combination and the range of the possible values.

Alternatively a value for thermal diffusivity for a particular water main can be obtained by measuring the ground and water temperature along that particular section of water main when there is a known flow along it and re-arranging Equation 1 to obtain a value for thermal diffusivity. The uncertainty in the thermal diffusivity for that main can be derived from error estimates in that particular measurement.

Then at 242, for each section of water main and each flow period, the anomalous water flow rate (Qa) is calculated. This can be calculated as the difference between the calculated flow rate (Qc) from 240 and the expected flow rate (Qe) from 232.

At 244, the maximum likely value for Qa (Qa_max) is calculated and the minimum likely value for Qa (Qa_min) is calculated. These can be calculated from estimated errors in the parameters used in Equations 1 and 3. For example, Qa_max and Qa_min can be calculated from the central values of the parameters and estimated uncertainty in the input parameters in Equations 1 and 3 and Qc using root mean square (RMS) addition of errors or by Monte Carlo simulation of the effect of errors. Ways of estimating errors in the various parameters are discussed above in relation to use of equations 1 and 3 at 240 to calculate Qc.

Hence, the maximum and minimum values of the anomalous water flow rate (Qa_max, Qa_min) in the section of main, for each section of main and each flow period have been established.

At 246 Qa_max and Qa_min are used to identify which water main sections are associated with the location of the source or cause of the anomalous flow. For each section of water main and each flow period, it is determined whether Qa_max and Qa_min both have the same sign (i.e. both positive or both negative) and if both are greater than the minimum anomalous flow of interest, Qi. If they do, then the water main section is recorded or otherwise identified as having a significant anomalous flow.

If only a single water main section is identified at 246, then that water main section can be defined as the reduced search area at 248. If a sequence of connected sections of water main are recorded or identified as having significant anomalous flows, then at 248 a reduced search area is defined which starts at the upstream end of the furthest downstream section with significant anomalous flows. For sections of water main downstream of the furthest downstream section in a sequence of one or more water main sections recorded as having a significant continuous flow, it is determined at 248 whether Qa_min is less than Qi. If so, then the reduced search area for the anomalous flow is defined at 248 as ending upstream of the downstream end of that section.

At 250, a confidence score of 1 is assigned to each reduced search area identified for each flow period. So, for example, if there are four sections of water main connected to each other in sequence as illustrated in Figure 3, and if the minimum flow rate of interest (Qi) is +0.2 l/s and the anomalous flow rates for each water main section are recorded as set out in the Table 1 below:

Table 1

| Section | Qa_min (l/s) | Significant anomalous flow? | Comment |
|---------|--------------|-----------------------------|---------|
| 1 | 1.1 | Yes | Qa_min more than Qi. There is a downstream section with significant anomalous flow, so section 1 is excluded from the reduced search area |
| 2 | 1.0 | Yes | Qa_min more than Qi. This is the furthest downstream section with significant anomalous flow, so the reduced search area starts downstream of the upstream end of this section. |
| 3 | -0.01 | No | Qa_min less than Qi so the reduced search area ends at the upstream side of the downstream end of this section |

(continued)

| Section | Qa_min (l/s) | Significant anomalous flow? | Comment |
|---|---|---|---|
| 4 | 0.05 | No | Qa_min less than Qi. No significant anomalous flow. This section is outside the search area. |

Then the reduced search area 324 is between the upstream end of the furthest downstream section with significant anomalous flow (i.e. the upstream end of section 2, 314 in Figure 3) and the downstream end of the next downstream section with Qa_min less than Qi (i.e. the downstream end of section 3, 316) corresponding to the shaded area 324 in Figure 3. Hence, a reduced search area has been defined at 248 for a particular flow period.

Then, at 250, for each flow period and for each water main section identified as having a significant anomalous flow, any upstream water main sections for which a significant anomalous flow has also been recorded are identified. These correspond to upstream water main sections through which water in the downstream section identified as having significant anomalous flow would be expected to flow, at the expected flow rates. Then the confidence score for the reduced search area is incremented by 1 for each identified upstream section with an anomalous flow.

In the example shown in Figure 3 section 1 of the water main 312 has an anomalous flow (see Table 1). Hence, the reduced search area 324 downstream of it (shaded in Figure 3) has a confidence score of 2 for a particular flow period.

Then at 252, all of the reduced search areas, e.g. 324, that have been defined in the initial search area 300 of the distribution system and their confidence scores are identified for each flow period. The confidence scores for each flow period for each reduced search area are added and the reduced search areas may be ranked by the total confidence scores. Hence, a reduced search area which has a confidence score for every or a large number of flow periods will have a higher total confidence score which may be indicative of a continuous break or a leak in the water main as anomalous water flow has been identified for many or every flow period. Whereas, a reduced search area which has a confidence score for a few or a single flow period will have a lower total confidence score possibly indicative of a more intermittent or occasional cause of anomalous water flow. Hence, ranking the reduced search areas in this way can prioritising those reduced search areas with the highest confidence scores for further investigations and/or remedial action at 222.

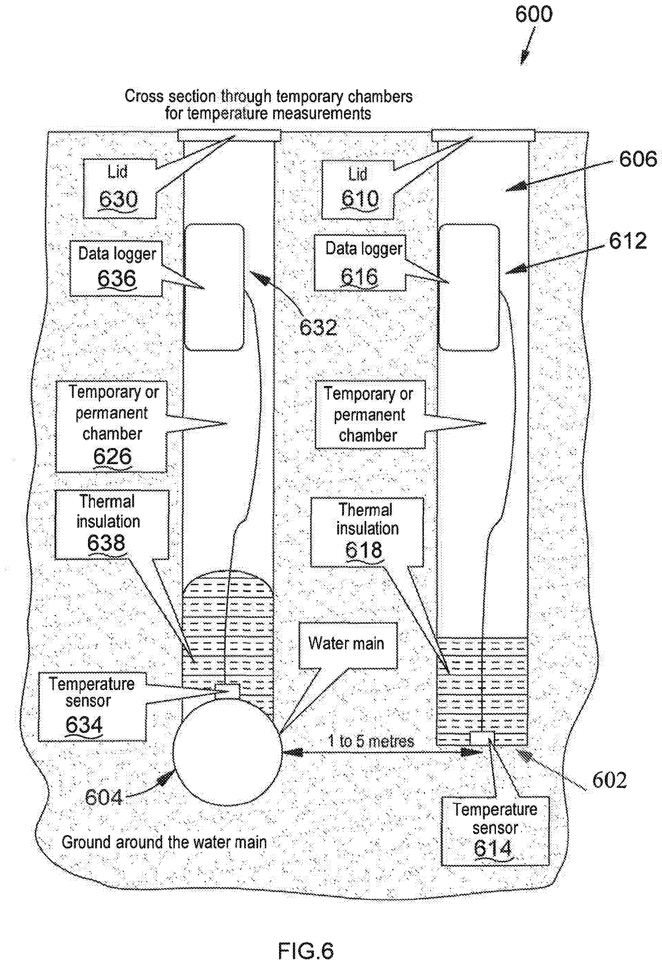

A second embodiment of the method illustrated in Figures 2 and 5 will now be described with further reference to Figure 6. Much of the second embodiment of the method is generally similar to the first embodiment. The major differences lie in the details of how the mains water temperature and ground temperature are measured and /or determined. In the second embodiment ground temperatures are directly measured and mains water temperatures are inferred from temperature measurement on the outside of water mains.

Figure 6 shows a schematic cross sectional diagram of a part 600 of an installation of temperature logging apparatus at an upstream or downstream end of a section of water main and which is particularly suitable for use in the second embodiment of the invention.

The temperature of the ground 602 at the depth of the water main 604 can be measured in an existing excavation 606 or by making a new excavation. The excavation 606 can be made using vacuum excavation techniques. The excavation 606 can be temporary or permanent. The depth of the hole 606 is preferably substantially shall be the same as the depth of the centre line of the main 604. For example, this may be approximately 0.9m plus half the external diameter of the water main 604. More precise assessments of the depth of the centre line of the water main 604 can be obtained from record drawings or measurement of depths of fittings where available. A lid 610 may be fitted to the hole 606 to protect the temperature logging apparatus 612 in the hole 606.

The temperature logging apparatus 612 consists of a first temperature sensor 614, attached to a first data logger 616 configured to record measured temperature data at regular intervals (e.g. every 10s to every 60s). The data logger 616 may also be attached to or include a data transmitter that sends the measured temperature data to a computer for analysis. Alternatively the data from the data logger 616 may be downloaded and transferred to a computer for analysis. The temperature sensor 614 is in thermal contact with the ground 602 at the base of the hole, and which may be achieved by use of thermally conducting paste. The temperature sensor 614 is insulated from the temperature of the air in the open hole by thermally insulating material 618.

The temperature of the outside of the water main 604 at the depth of the water main can be measured in an existing excavation 626 or by making a new excavation 626. The excavation 626 can be made using vacuum excavation techniques. The excavation 626 can be temporary or permanent. The depth of the hole 626 is sufficient to expose the crown of the main and provide space for adequate thermal insulation material 638. A lid 630 may be fitted to the hole 626 to protect the temperature logging apparatus 632.

The temperature logging apparatus includes a second temperature sensor 634 attached to a second data logger 636 configured to record measure temperature data at regular intervals. The data logger 636 may also be attached to or include a data transmitter that sends the data to a computer for analysis. Alternatively the data from the data logger 636 may be downloaded and transferred to a computer for analysis. The temperature sensor 634 is in thermal contact with the crown of the water main 634 and this may be achieved by use of thermally conducting paste. The temperature sensor 634 is thermally insulated from the temperature of the air in the hole 626 and the ground around the water main by thermal insulation material 638.

The second embodiment of the method of identifying a reduce search area and the data processing method are generally similar to those described above with reference to Figures 2 and 5.

At 202 an initial search area of the water distribution network is selected.

At 204 a logging period of between 15 minutes and seven days is selected and one or more flow periods are selected. These flow periods are may be between five minutes and one hour within the logging period. One or more reduced search areas may be identified for each flow period by the method described here.

At 206 the points along the network where demand may be expected to take place (usually due to customer connections) are identified in the initial search area and can be used to calculate expected demand from each consumption point during each flow period during the planned logging period and during which temperature logging is going to take place.

At 208, the initial search area is divided into sections of water main each with length less than 5km and each having a number of properties connected downstream of the beginning of the section of water main of between 1 and 100 properties.

The temperature logging apparatus are installed as described with reference to Figure 6 at each upstream end and each downstream end of each section of water main at 210.

At 212 the temperature of the ground at the depth of the water main at each end of each section of water main is logged. If the length of the section is greater than 100 metres, then the ground temperature is also logged using an installation similar to that shown in the right hand side of Figure 6, at intervals of between about 50 and 200 metres along the water main, and at a distance of between about 1 metre and 5 metres to the side of the water main, as a function of time. Temperature data may be logged at regular intervals, e.g., of between 10s to 60s, over the logging period.

At 214 the temperature of the outside surface of the water main is logged at each end of each section as a function of time, for example using an interval of between 10s and 60s, to allow temperature of the water in the main to be calculated at regular intervals of between 10 and 60 seconds over the logging period.

The measured water temperature data and the ground temperature data may then be transmitted or downloaded or otherwise exported from all the data loggers to a computer for subsequent analysis and data processing at 216 using the generally the method 230 illustrated in Figure 5.

At 232, for each section of water main and each flow period, the expected flow rate (Qe) along the section of the water main due to the demands during the flow period is calculated by adding up the expected demand of the customers served through each section.

The ground temperature ($T_g$) and water temperatures are estimated at 234 and 236 as described above.

At 238 a minimum anomalous flow rate of interest (Qi) or threshold is set for each section of water main and for each flow period. The minimum anomalous flow rate of interest may be decided by the user of the system. For example the minimum flow rate of interest may be set as a proportion (such as 10%) of the flow rate of an anomalous water flow that has been identified from meter data entering an area that includes the sections of water main. Alternatively, as an example, the minimum flow rate of interest may be the smallest leak flow rate that it is economic to repair.

At 240, for each section of water main and for each flow period, the water flow rate (Qc) in the section of water main is calculated from the assessed water temperatures and other parameters using Equations 1 and 3 above.

At 242, for each section of water main and for each flow period, the anomalous flow rate (Qa) is calculated. This may be the difference between the calculated flow rate (Qc) and the expected flow rate (Qe).

At 244, the maximum likely value for Qa (Qa_max) and the minimum likely value for Qa (Qa_min) are each calculated. The estimated error in the parameters used in Equations 1 and 3 may be used. Qa_max and Qa_min can be calculated from the central values of the input parameters and estimated uncertainty in the input parameters in Equations 1 and 3 and Qc using RMS addition of errors or by Monte Carlo simulation of the effect of errors.

For each section of water main and for each flow period, the maximum and minimum assessed anomalous flow, Qa_max and Qa_min, in the section of water main are recorded.

At 246, for each section of water main and for each flow period, it is determined whether Qa_max and Qa_min have the same sign (i.e. both are positive or both are negative) and whether both are greater than the minimum anomalous flow of interest (Qi). If they are then that section of water main is recorded or otherwise flagged or identified as having a significant anomalous flow.

At 248, if there is a sequence of connected sections of water main recorded as having significant anomalous flows, then a reduced search area may be defined which starts at the upstream end of the furthest downstream section of water main with significant anomalous flows. For sections of water main downstream of the furthest downstream section in a sequence of one or more sections recorded as having a significant anomalous flow, it is determined whether Qa_min is less than Qi. If it is, then the reduced search area for the anomalous flow can be identified as ending upstream of the downstream end of that section. A confidence score of 1 is then assigned to each reduced search area identified.

At 250, for each flow period for each section identified as having a significant anomalous flow, any upstream sections (i.e. sections through which water in the downstream section identified as having significant anomalous flow would be expected to flow, at the expected flow rates) where a significant anomalous flow has also been recorded are identified. For each upstream section with an anomalous flow, the confidence score of the reduced search area is incremented by 1.

Then at 252, for each flow period, all of the reduced search areas defined in the initial search area of the distribution system and their associated confidence scores are identified. The confidence scores for each flow period and for each reduced search area are summed to give a total confidence score. To give a ranking of flow periods and the reduced search areas in each flow period. The further investigations and/or remedial action 222 may then be carried out prioritising those reduced search areas with the highest total confidence scores.

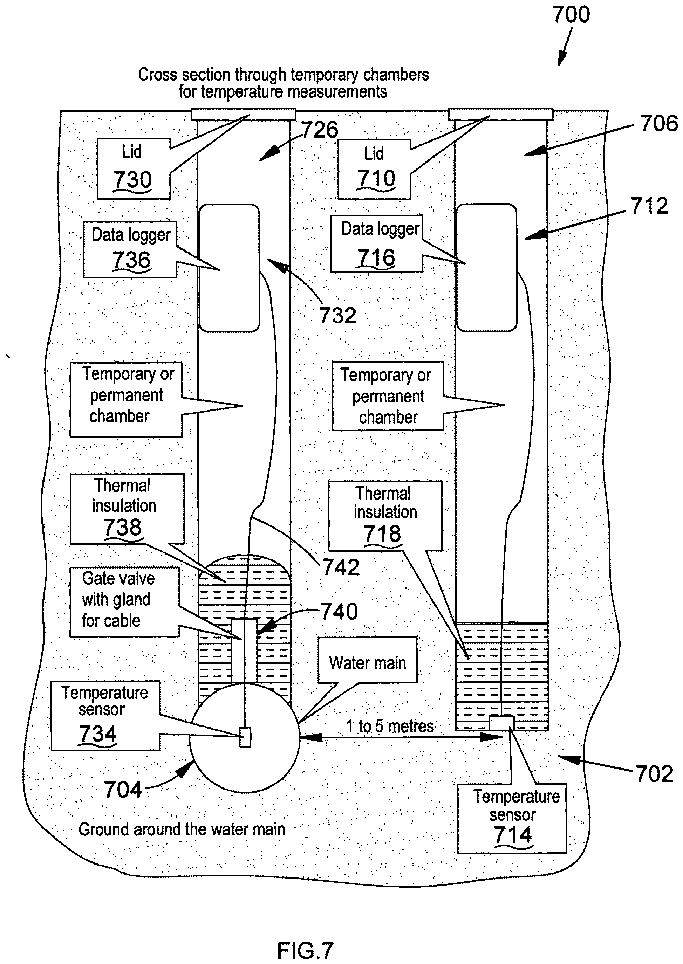

A third embodiment of the method illustrated in Figures 2 and 5 will now be described with further reference to Figure 7. Much of the third embodiment of the method is generally similar to the second embodiment. The major differences compared to the second embodiment lie in the details of how the mains water temperature is measured. In the third embodiment mains water temperatures are measured directly inside the water mains.

Figure 7 shows a schematic cross sectional diagram of a part 700 of an installation of temperature logging apparatus at an upstream or downstream end of a section of water main and which is particularly suitable for use in the third embodiment of the invention.

The temperature of the ground 702 at the depth of the water main 704 can be measured in an existing excavation or by making a new excavation. The excavation can be made using vacuum excavation techniques. The excavation can be temporary or permanent. The minimum horizontal dimensions of the hole 706 produced by the excavation, or in the existing excavation, may be 60mm in width and length. The maximum horizontal dimensions may be 2000mm in width and length. The depth of the hole 706 is preferably the same as the depth of the centre line of the water main 704. This may be approximately 0.9m plus half the external diameter of the water main 704. More precise measurements can be obtained from record drawings or measurement of depths of fittings where available. A lid 710 may be fitted to the hole 706 to protect the temperature logging apparatus 712.

The temperature logging apparatus 712 consists of a first temperature sensor 714, attached to a first data logger 716 configured to record measured temperature data at regular intervals (e.g. every 10s to every 60s). The data logger 716 may also be attached to or include a data transmitter that sends the measured temperature data to a computer for analysis. Alternatively the data from the data logger 716 may be downloaded and transferred to a computer for analysis. The temperature sensor 714 is in thermal contact with the ground 702 at the base of the hole, and which may be achieved by use of thermally conducting paste. The temperature sensor 714 is insulated from the temperature of the air in the open hole by thermally insulating material 718.

The temperature of the water inside the water main 704 can be measured and recorded using temperature measuring apparatus 732 consisting of a second temperature sensor 734 attached to a second data logger 736 configured to measure and record measured temperature data at regular intervals. The data logger 736 may be attached to or include a data transmitter that sends the measured temperature data to a computer for analysis. Alternatively the data from the data logger may be downloaded and transferred to a computer for analysis.

The temperature sensor can be inserted into the water main 704 through a fitting. For example, the temperature sensor can be pass through a gate valve 740 having a gland for the cable 742 of the temperature sensor. In other embodiments, the water temperature in the water main can be can be measured by inserting the temperature measuring sensor through a fire hydrant or washout or other fitting on the water main at the start or end of each water main section. Thermal insulation 738 can be provided about the fitting and a lid 730 can be provided to the chamber 726 to protect the temperature logging apparatus 732.

The third embodiment of the method of identifying a reduced search area and the data processing method are generally similar to those described above with reference to Figures 2 and 5.

After 202, at 204, a logging period of between 15 minutes and seven days and one or more flow periods are selected. The flow periods may last between five minutes and one hour during the logging period. One or more reduced search areas may be identified for each logging period using the described method.

At 206, the points in the initial search area where demand may be expected to take place (usually due to customer connections) are identified so that an expected demand can be calculated subsequently at each flow period during the planned logging period when temperature logging will take place.

At 208, the initial search area is divided into sections of water main on each with length less than 5km and with the number of properties connected to a downstream end of that section of water main between 1 and 100 properties.

At 210, the temperature logging apparatus is installed at the upstream and downstream ends of each section of water main.

At 212, the temperature of the ground at the depth of the water main is logged as a function of temperature at each end of the sections of water main at regular intervals of between 10s and 60s over the logging period, which may be, e.g., a 24 hour period. If the length of the section is greater than 200 metres, then the ground temperature is logged at intervals of approximately 100 metres along the main and at a distance of between 1 metre and 5 metres to the side of the water main using an arrangement similar to that illustrated by the right hand side of Figure 7.

At 214 the temperature of the water inside the water main is logged at each end of each section as a function of time, for example using an interval of between 10s and 60s, to allow temperature of the water in the main to be calculated at regular intervals of between 10 and 60 seconds over the logging period.

The measured water temperature data and the ground temperature data may then be transmitted or downloaded or otherwise exported from all the data loggers to a computer for subsequent analysis and data processing at 216 using generally the method 230 illustrated in Figure 5.

At 232, for each section of main and each flow period, the expected flow along the section of the distribution network due to the demands during the flow period is calculated by adding up the expected demand of the customers served through each section.

At 234 and 236 the ground temperature and water temperature are estimated from the measured temperature data as described above.

At 238, for each section of water main and each flow period, a minimum anomalous flow rate of interest (Qi) or threshold is set. The minimum anomalous flow rate of interest may be decided by the user of the system. For example the minimum flow rate of interest may be set, as a proportion (such as 10%) of the flow rate of an anomalous flow rate that has been identified from meter data entering an area that includes the sections of water main. Alternatively, as an example, the minimum flow rate of interest may be the smallest leak flow rate that it is economic to repair.

At 240, for each section of main and each flow period, the water flow rate (Qc) in the section is calculated from the water temperatures established at 236 and other parameters. This calculation can be made using Equations 1 and 3.

At 242, for each section of water main and each flow period, the anomalous flow rate (Qa) is determined. This may be calculated as the difference between the calculated flow (Qc) and the expected flow (Qe).

At 244, the maximum likely value for Qa (Qa_max) and the minimum likely value for Qa (Qa_min) are calculated from the estimated error in the parameters used in Equations 1 and 3. For example, Qa_max and Qa_min can be calculated from the central values of the input parameters and estimated uncertainty in the input parameters in Equations 1 and 3 and Qc using RMS addition of errors or by Monte Carlo simulation of the effect of errors.

For each section of water main and for each flow period, the maximum and minimum assessed anomalous flow, Qa_max and Qa_min, in the section of water main are recorded.

At 246, for each section of main and each flow period, it is determined whether both Qa_max and Qa_min have the same sign (i.e. both are positive or both are negative) and also whether both are greater than the minimum anomalous flow of interest (Qi). If they are, then that section is identified and recorded or otherwise flagged as having a significant anomalous flow.

At 248, if there is a sequence of connected sections of water main which have been recorded as having significant anomalous flows, then a reduced search area is defined which starts at the upstream end of the furthest downstream section with significant anomalous flows. For sections of water main downstream of the furthest downstream section in a sequence of one or more sections recorded as having a significant continuous flow, it is determined whether Qa_min is less than Qi. If so, then the reduced search area for the anomalous flow is recorded as ending upstream of the downstream end of that section. A confidence score of 1 is assigned to each reduced search area identified in this way.

At 250, for each flow period and for each section identified as having a significant anomalous flow, any upstream sections (i.e. sections through which water in the downstream section identified as having significant anomalous flow would be expected to flow, at the expected flow rates) where a significant anomalous flow has also been recorded are identified. The confidence score for the reduced search area is incremented by 1 for each upstream section with an anomalous flow identified.

At 252, for each flow period, all of the reduced search areas defined in the initial search area of the distribution system and their confidence scores are identified. The confidence scores for each flow period for each reduced search area are summed to provide a total confidence score. The reduced search areas for each flow period may then be ranked and those reduced search areas with the highest confidence scores may be prioritised at 222 for further searching to pinpoint the cause or source of the water flow anomalies (e.g., leaks, unknown consumption or open boundary valves) within the reduced search areas.

An example of the application of the first embodiment of the method will now be described with reference to a simplest case. This example also illustrates most of the steps of the second and third embodiments of the method.

In this example a logging period of 24 hours has been selected and two flow periods, each of one hour have been selected. The flow periods are from 03:00 to 04:00 and from 07:00 to 08:00.

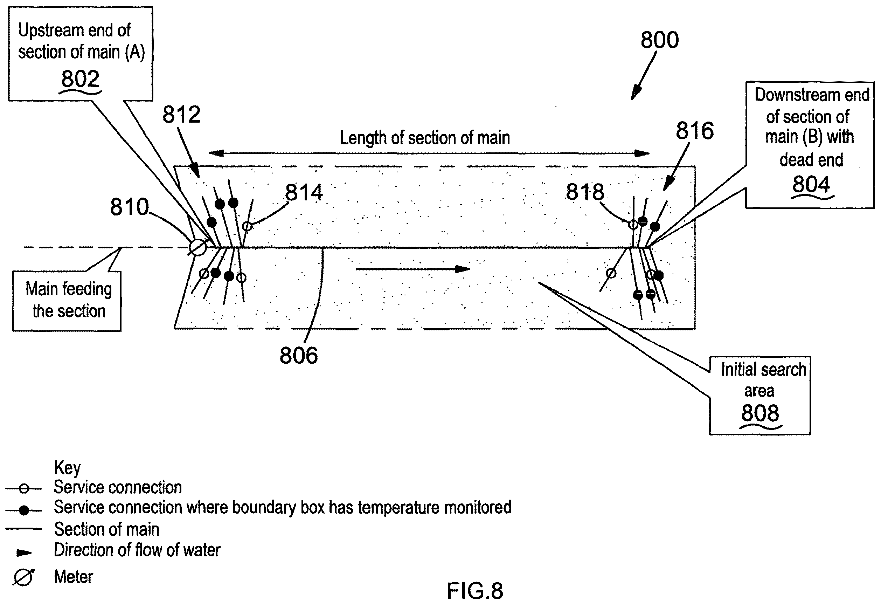

Figure 8 shows a schematic diagram of a small part 800 of a distribution network with two nodes: an upstream node A 802 and downstream node B 804, at each end of a length of water main 806. This is the initial search area 808.

The inlet to this section of water main is at A 802. The material of the water main 806 is, for example, Polyethylene (PE). There is a meter 810 measuring flow into the section of the network along the main 806 at this point. There are 40 customer connections, represented by 812, to the main at A 802, next to, and just downstream of, the meter 810, each with a boundary box, e.g. 814. There are 40 customer connections, represented by 816, at point B 804 at the other downstream end of the main 806, each with a boundary box, e.g., 818. Not all of the customer connections are shown in Figure 8 for the sake of clarity. Some of the boundary boxes (shaded in Figure 8) at the upstream end and some at the downstream end include temperature logging apparatus 612 as described above with reference to Figure 6 and some do not (unshaded in Figure 8).

The estimated customer consumption is approximately 2 litres per property per hour during the minimum flow period (between 03:00am and 04:00am) and approximately 30 litres per property per hour during the maximum flow period (between 07:00am and 08:00am). These values may be derived from typical consumption for the type of consumer. Table 2 sets out the corresponding estimated customer consumption flow rates.

Table 1

| Node | Number of properties connected at the node | Expected demand at minimum flow period (l/hour) | Expected demand at maximum flow period (l/hour) |
|---|---|---|---|
| A | 40 | 80 | 1200 |
| B | 40 | 80 | 1200 |

The initial search area is divided into one or more sections of water main, each with length less than 5km and the number of properties connected to the downstream end of that section of main between 1 and 100 properties. Identify the upstream and downstream ends of each section of main. Table 3 sets out the sections of water main so identified for the current example and which is simply 1 section of water main extending between the upstream node A 802 and the downstream node B 804.

Table 3

| Section reference | From node (upstream end) | To node (downstream end) | Length of main section (m) | No. of properties connected at downstream end |
|---|---|---|---|---|
| 1 | A | B | 2000 | 40 |

There is a zone inlet meter 810 next to node A 802 and a dead end at node B 804. Therefore node B must be the downstream end in both flow periods.

The temperature of the boundary box wall is logged at regular intervals of between 10 and 60 seconds at the lowest point in the boundary box for each of a group of ten properties at each end of each section for the logging period. From this data the ground temperature can be estimated for each 24 hour period within the logging period. The mean value of the median temperature values for each hour from the lowest point on each of the ten boundary boxes is, in this example, 8.6 degrees Celsius.

Then the temperature of the stop-tap within the boundary box is logged for a group of ten properties at the start and end of each section for the logging period. This is the same group of properties as used above. From this data the temperature of the water in the main can be estimated at each end of the section as a function of time at regular intervals (time steps) of between 10 and 60 seconds over the logging period.

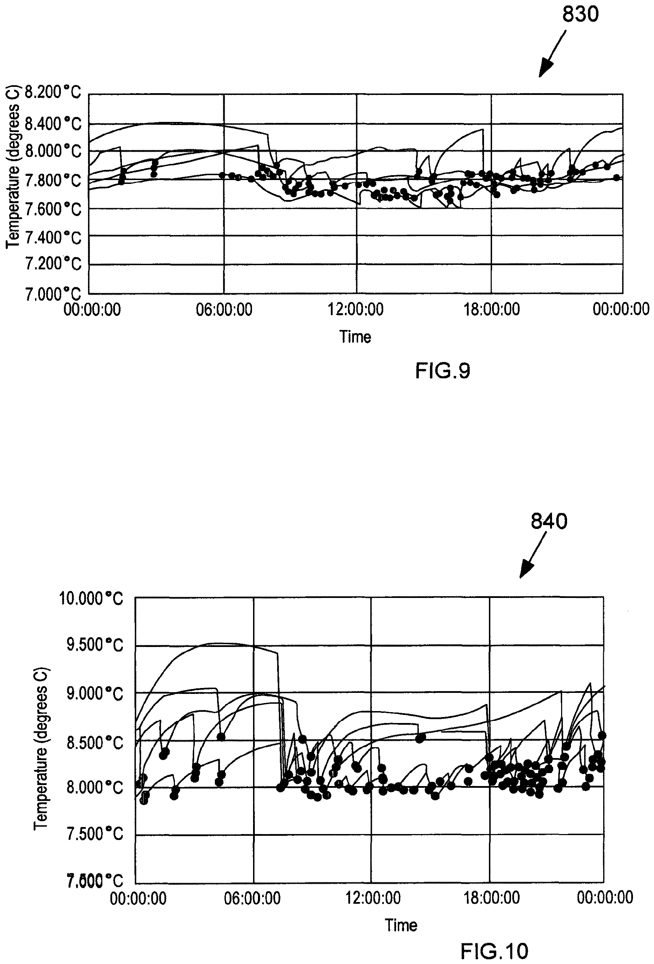

Figure 9 shows a graph 830 of the measured temperatures at each of five stop taps at the upstream end 802 of the section of main over the 24 hour logging period. The dots show the estimates of mains water temperature from peaks and troughs in the measured temperatures at the corresponding times.

Figure 10 shows a graph 840 of the measured temperatures at each of five stop taps at the downstream end 804 of the section of main over the 24 hour logging period. The dots show the estimates of mains water temperature from peaks and troughs in the measured temperatures at the corresponding times.

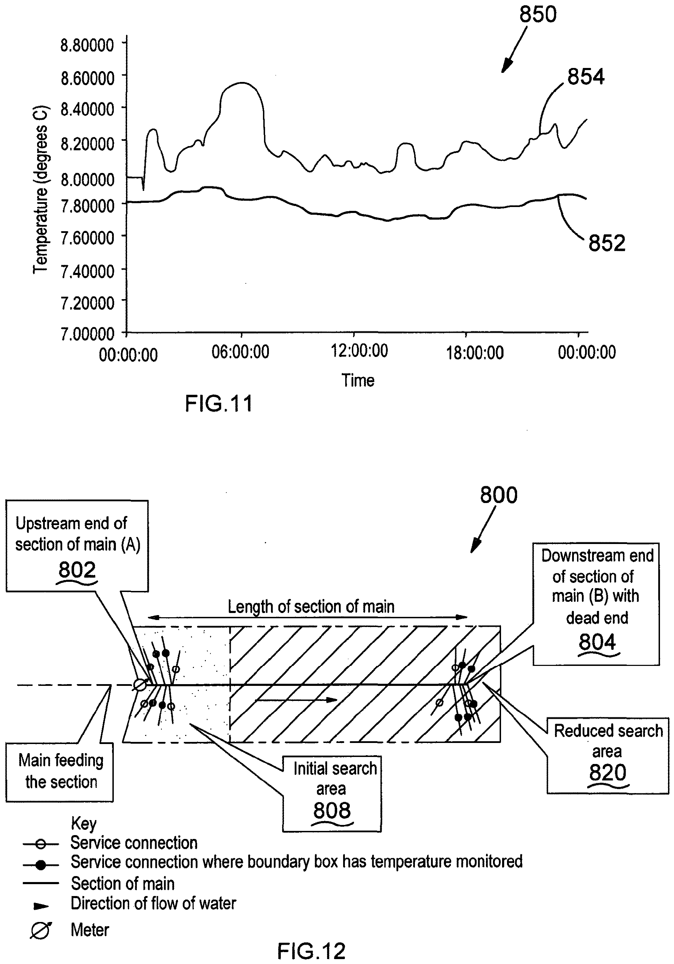

A time-difference weighted average of the water temperature estimate, for point A 802 and point B 804 is calculated and gives the mains water temperature estimates shown in Figure 11. Figure 11 shows a graph 850 illustrating the calculated weighted average mains water temperature over the 24 hour logging period for the upstream end 852 and the downstream end 854 of the section of water main 806. The average estimated water temperatures for a minimum flow period (between 03:00 and 04:00) and a maximum flow period (between 07:00 and 08:00) are set out below in Table 4 and Table 5 respectively.

For each section of water main and each flow period, the expected flow along the section of the distribution network due to the demands during the flow period is calculated by adding up the expected demand of the customers served through each section. In this example, the expected flow along the section of main 806 from just downstream of the connections at point A to just upstream of the connections at point B is due only to the demand from the 40 customers connected close to point B. The spread in the positions of the customer connections along the main leads to an uncertainty in the effective length of the section of main when calculated and expected flows are compared. This uncertainty in the length of the section of main is shown in the value of the calculated error in the length of the section of main in Tables 4 and 5 below. The expected flow along the main is therefore, from Table 2, 80 litres per hour (0.0222 litres/second) between 03:00 and 04:00 and 1200 litres per hour (0.333 litres/second) between 07:00 and 08:00.

For each section of main and each flow period the minimum anomalous flow rate of interest (Qi) is determined. For this section of water main 806, the meter 810 just upstream of A shows a flow of, e.g., 2.04 litres/second between 03:00 and 04:00 and a flow of 2.4 litres/second between 07:00 and 08:00. Therefore the measured flow is approximately 2 litres/second greater than expected for each flow period. It would be useful to understand whether any of the flow is due to additional demand (including leakage) at point A or additional demand (including leakage) at point B or somewhere in between. The anomalous flow of interest (Qi) may be set at 0.2 litres/second, being 10% of the difference between the measured and expected flow through the meter and also may be a practical lower limit for the size of leak that is likely to be easily pinpointed on this PE main.

For each section of main and each flow period, the flow (Qc) in the section is calculated from the assessed water temperatures and parameter values. This calculation can be made using Equations 1 and 3.

Using Equations 1 and 3 the flow rate along the section for the minimum flow period can be calculated using the following parameter values: main section length l (2000 metres), internal diameter d (0.1 metres), depth of burial z (0.9 metres), thermal diffusivity of the ground around the main $\alpha$ ($3 \times 10^{-7}$ m$^2$/s), the estimated average ground temperature in the section (Tg) (8.6 degrees C), water temperature at point A ($T_1$) between 03:00 and 04:00 (from Figure 11) 7.9 degrees C, water temperature at point B ($T_2$) between 03:00 and 04:00 (from Figure 11) 8.2 degrees C. This gives a calculated flow of 1.88 litres per second between 03:00 and 04:00.

Using Equations 1 and 3 the flow rate along the section of main for the maximum flow period can be calculated using the following parameter values: main section length l (2000 metres), internal diameter d (0.1 metres), depth of burial z (0.9 metres), thermal diffusivity of the ground around the main $\alpha$ ($3 \times 10^{-7}$ m$^2$/s), the estimated average ground temperature in the section (Tg) 8.6 degrees C, water temperature at point A ($T_1$) between 07:00 and 08:00 (from Figure 11) 7.80 degrees C, water temperature at point B ($T_2$) between 07:00 and 08:00 (from Figure 11) 8.10 degrees C. This gives calculated flow of 2.24 litres per second between 07:00 and 08:00.

For each section of main and each flow period the anomalous flow (Qa) is calculated as the difference between the calculated flow (Qc) and the expected flow (Qe). Also the maximum likely value for Qa (Qa_max) and the minimum likely value for Qa (Qa_min) are calculated from the estimated errors in the parameters in Equations 1 and 3. In the current example, standard errors in the input parameters (T1, T2, Tg, A (which is a combination of the input parameters $\alpha$, z and d (A = $2\pi\alpha$/ln(4z/d)) and L) are used to calculate upper and lower estimated values of the input parameters at 1.96 standard errors. The central values of the parameters and 1.96 times the standard errors in the output values are used to estimate the upper and lower anomalous flow estimates (Qa_max and Qa_min), in both flow periods as set out below in Table 4 and Table 5 for the low flow period and high flow period respectively.

Table 4: Example calculated anomalous flow at minimum flow period

| Parameter | Units | Value | Standard error estimate | Error estimate at 1.96 standard errors |
|---|---|---|---|---|
| T2 | Degrees C | 8.2 | 0.05 | 0.1 |
| T1 | Degrees C | 7.9 | 0.05 | 0.1 |
| Tg | Degrees C | 8.6 | 0.15 | 0.3 |
| R | | 0.57 | 0.12 | 0.2 |
| A | m^2/sec | 5.26E-07 | 1.05E-07 | 2.06E-07 |
| L | Metres | 2000 | 10 | 19.6 |
| Qc | l/sec | 1.88 | 0.82 | 1.60 |
| Expected flow Qe | l/sec | 0.0222 | | |
| Minimum anomalous flow Qa_min | l/sec | 0.26 | | |

(continued)

| Parameter | Units | Value | Standard error estimate | Error estimate at 1.96 standard errors |
|---|---|---|---|---|
| Maximum anomalous flow Qa_max | l/sec | 3.46 | | |

Table 5: Example calculated anomalous flow at maximum flow period

| Parameter | Units | Values | Standard error estimate | Error estimate at 1.96 standard errors |
|---|---|---|---|---|
| T2 | Degrees C | 8.1 | 0.05 | 0.1 |
| T1 | Degrees C | 7.8 | 0.05 | 0.1 |
| Tg | Degrees C | 8.6 | 0.1 | 0.2 |
| R | | 0.63 | 0.09 | 0.2 |
| A | m^2/sec | 5.26E-07 | 1.052E-07 | 2.062E-07 |
| L | metres | 2000 | 10 | 19.6 |
| Qc | l/sec | 2.24 | 0.80 | 1.57 |
| Expected flow Qe | l/sec | 0.333 | | |
| Minimum anomalous flow Qa_min | l/sec | 0.33 | | |
| Maximum anomalous flow Qa_max | l/sec | 3.48 | | |

Where the water main has length l, internal diameter d, depth of burial z, thermal diffusivity of the ground around the pipe $\alpha$, and A = $2\pi\alpha$/ln(4z/d). Tg is the temperature that the ground adjacent to the pipe returns to when there is no flow in the main, T 1 is the water temperature in the main at the upstream end of the section of main and T2 is the water temperature in the main at the downstream end of the section of main.

The maximum and minimum assessed anomalous flow values (Qa_max and Qa_min) in the section of main are recorded for each section of main and each flow period.

For each section of main and each flow period it is determined whether both Qa_max and Qa_min have the same sign (i.e. both positive or both negative) and whether both are greater than the minimum anomalous flow of interest (Qi). If they do then the section is recorded or otherwise identified as having an anomalous flow for that flow period. The reduced search area for the source of the anomaly is then recorded as being downstream of the upstream end of the section. In this example Qa_min and Qa_max are both positive and both greater than Qi for both flow periods. Therefore the reduced search area for the anomalous flow in both flow periods is set as downstream of node A 802 (i.e. not including the connections 812 at node A). This is illustrated by the cross hatched area 820 of the network 800 shown in Figure 12 (which corresponds generally to Figure 8). This reduced search area 820 has an initial confidence score of 1 assigned for each flow period.

Then, for each flow period and for each section identified as having a significant anomalous flow, any upstream sections where a significant anomalous flow has also been recorded are identified. These are sections through which water in the downstream section identified as having significant anomalous flow would be expected to flow, at the expected flow rates. For each upstream section with an anomalous flow recorded, a confidence score of 1 is added for the reduced search area. In this simple example there are no upstream sections of main so the confidence score for the reduced search area 820 remains at 1 for each flow period.

For each flow period, all of the reduced search areas defined in the area of the distribution system and their confidence scores are listed. The confidence scores for each flow period and for each reduced search area are summed or totalled. The reduced search areas can then be ranked or otherwise prioritised based on their confidence scores. In this simple example there is only one section, and only one reduced search area, so no further ranking or prioritisation is possible. The total confidence score for this reduced search area 820 is 2 (i.e. one for each of the two flow periods).

Some non-limiting examples of the results that may be would be obtained for three different circumstances in a four-section main will now be briefly described to further illustrate the invention. This part illustrates the results that may be obtained using by any of the three embodiments of the method described above and in relation to three different circumstances corresponding to different flow anomalies, each in a simple network consisting of four sections of water main.

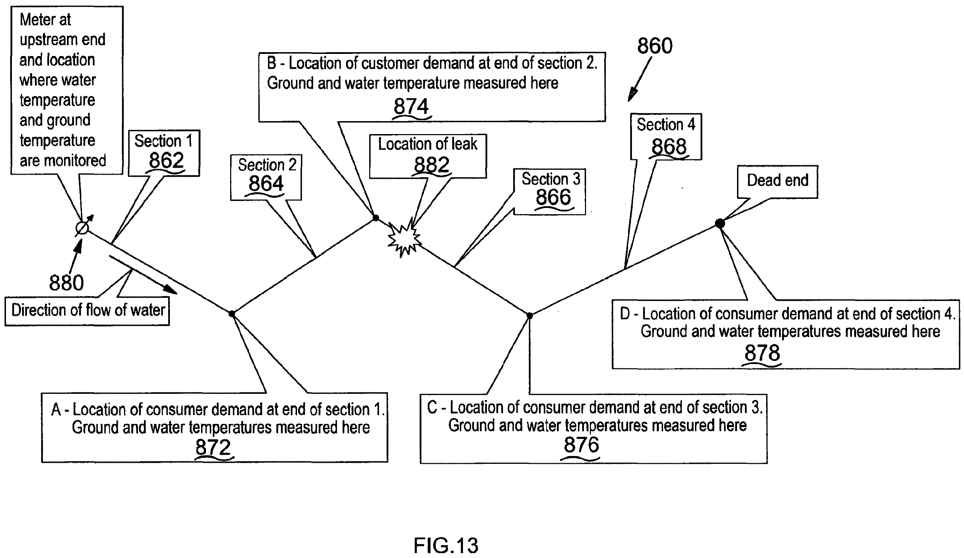

Each of Figures 13, 15 and 16 represent a length of water main 860 having four sections: 862, 864, 866, 868 called sections 1 to 4. The downstream ends of each section 872, 874, 876, 878 are labelled A, B, C and D respectively. There are customer connections at the downstream end of each section and a meter 880 measuring flow along the main 860 at the upstream end of section 1. The ground temperature and the water temperature are measured at the upstream and downstream ends of each section over a single flow period of 15 minutes from 3am to 3:15am by one of the three methods described above.

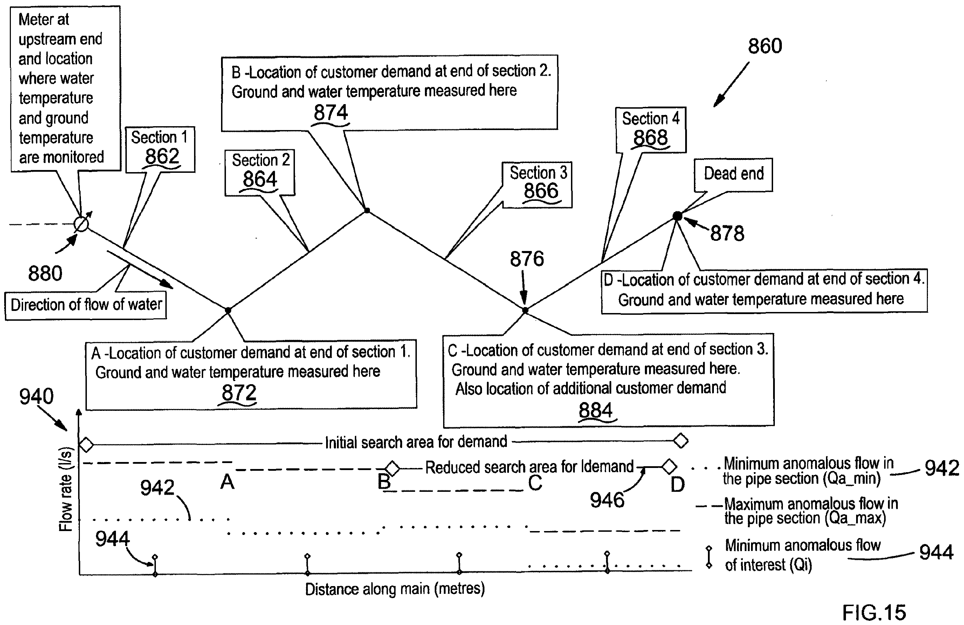

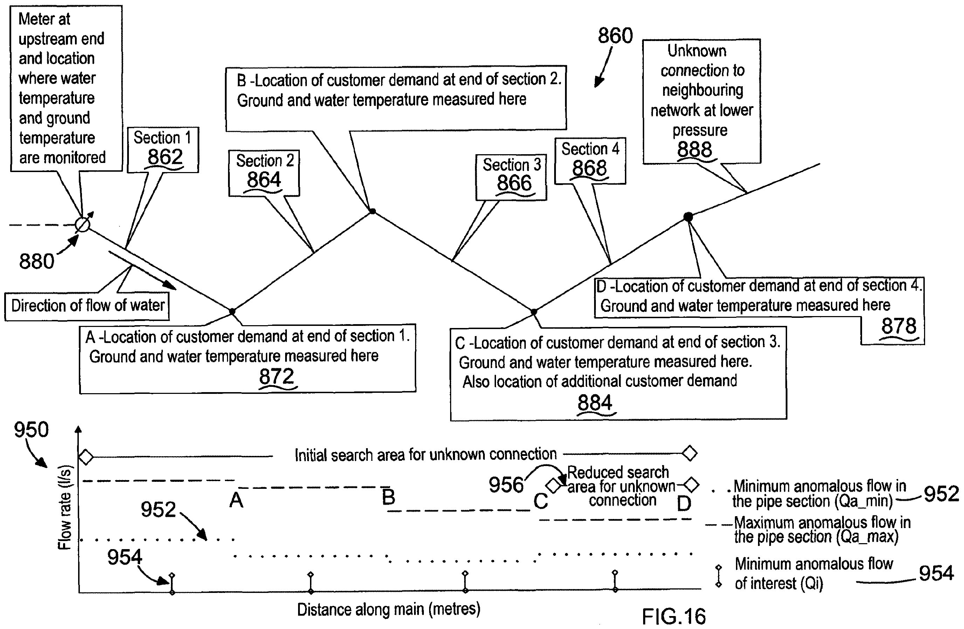

Figure 13 shows a first anomaly, a leak 882 on section 3. Figure 15 shows a second anomaly, additional customer demand 884 at point C, at the downstream end 876 of section 3 of water main 866, at the junction with section 4. Figure 16 shows a third anomaly, an unknown open boundary valve 886 at the downstream end 878 of section 4 of water main 868 into a part of the distribution network 888 at a lower pressure: hence flow occurs out of section 4.

The initial search area for the anomaly is the whole of all four sections of main and the customer connections from the downstream ends of all four of the sections of main. The outputs in all three circumstances are: a reduced search area that includes the location of the anomaly and which is smaller than the initial search area. Also a confidence score for the reduced search area can be generated

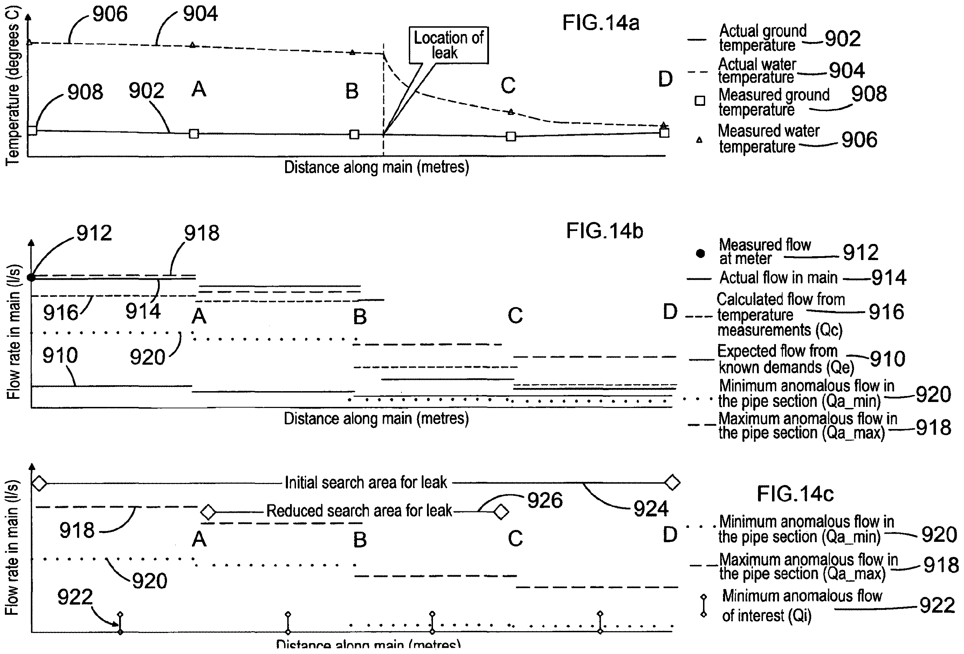

Figures 14A to 14C show graphs illustrating various properties, calculations and the results of the method for the circumstance illustrated in Figure 13. Figure 14A shows the measured ground temperature 908 and measured water temperature 906 at each end of each section, and the actual ground temperature 902 and actual water temperature 904 at points between those ends.

Figure 14B shows the expected flow along each section 910 (Qe), the measured flow into the upstream end of section 1 912, the actual flow along each section 914 (noting the step down in the flow along section 3 at the location of the leak), the flow that is calculated from the measured temperatures 916 (Qc), the maximum anomalous flow 918 (Qa_max) and the minimum anomalous flow 920 (Qa_min)

Figure 14C shows Qa_min 920 and Qa_max 918 for each section and the minimum anomalous flow of interest for each section, Qi 922, by the vertical line at the middle of each section. It also shows the initial search area 924 consisting of all four sections of main and the resulting reduced search area 926 identified by the method.

Figure 14A shows that the difference between the water temperature 904 and the ground temperature 902 reduces very little between the inlet and the location of the leak, but the difference reduces significantly between the location of the leak and the downstream end of section 3. Figure 14B shows that the measured flow at the inlet 912 is much greater than the expected flow 910 along section 1, from the inlet to A and that this difference is greater than the anomalous flow of interest Qi 922 shown in Figure 14C.

Figure 14B also shows that the calculated flow 916 in sections 1 and 2 (from the change in measured temperature from one end to the other of those sections), is greater than the expected flow 910.

Figure 14C shows that in section 1 and section 2 Qa_max 918 and Qa_min 920 are each greater than the minimum anomalous flow of interest Qi 922. However in sections 3 and 4 Qa_min 920 is less than Qi 922. This indicates that the anomaly leading to the anomalous flow is between the upstream end of section 2 (not including the customer connections at point A) and the downstream end of section 3 (not including the customer connections at point C) and this forms the reduced search area 926.

The total confidence score for this reduced search area is 2: the sum of an initial confidence score of one for the identified reduced search area (between A and C) and a score of one for the existence of an upstream section (section 1, 862) that also has an anomalous flow (Qa_min 920) greater than the minimum anomalous flow of interest (Qi 922). If there were other anomalous flows identified at the same time then the investigation of this reduced search area would be prioritised above those with a total confidence score of 1.

The second circumstance is illustrated in Figure 15 which shows the same simple network of four sections. The ground temperature and water temperature are also measured at the same points (inlet, A, B, C and D). There is an additional customer demand 884 at point C 876 at the downstream end of Section 3, 866. The graph 940 in Figure 15 shows that the minimum anomalous flow Qa_min 942 is greater than the minimum anomalous flow of interest Qi 944 for sections 1, 2 and 3. This indicates that the location of the anomaly causing the additional flow is between the upstream end of section 3 (not including the customer connections at point B) and the downstream end of section 4 (not including the customer connections at point D) and this forms the reduced search area 946 shown in the graph 940 of Figure 15.

The total confidence score for this reduced search area is 3: an initial confidence score of one for the reduced search area 946 and an additional one for each of the two other upstream sections 862, 864 with Qa_min greater than Qi.

The third circumstance is illustrated in Figure 16. This shows the same simple network of four sections 862, 864, 866, 868. The ground temperature and water temperature are also measured at the same points (inlet, A 872, B 874, C 876 and D 878). There is an unknown boundary valve open 886, through which an additional part 888 of the distribution network is being supplied at the downstream end 878 of Section 4 868.

The graph 950 in Figure 16 shows that the minimum anomalous flow, Qa_min 952, is greater than the minimum anomalous flow of interest Qi 954 for all four sections. This indicates that the location of the anomaly causing the additional flow is between the upstream end 876 of section 4 (not including the customer connections at point C) and the downstream end 878 of section 4 ( including the customer connections at point D) and this forms the reduced search area 956 illustrated in the graph 950 in Figure 16.

The total confidence score for the reduced search area 956 is 4 as, in addition to the initial confidence score of 1 for the reduced search area 956, there are three upstream sections 862, 864, 866 where Qa_min is greater than Qi.

Hence, various aspects of the methods, apparatus, data processing methods and installations described herein may be used to help reduce the search area for the cause or source of water flow anomalies. The methods described herein are not limited to the specific mains networks, installations or circumstances specifically described herein, but may be used in any water distribution network and/or any way of measuring directly, or indirectly, the ground temperature and water temperature in the water main and/or for any water anomaly circumstance as will be apparent to the person of ordinary skill in the art from the teaching herein.

In this specification, example embodiments have been presented as particular combinations of features. However, a person of ordinary skill in the art would understand that many other embodiments may be practiced which include a different combination of features, including fewer features or a greater number of features. It is intended that the following claims cover all possible embodiments.

Any instructions and/or flowchart steps may be carried out in any order, unless a specific order is explicitly stated or would be understood to be required from the context of the description. Also, those skilled in the art will recognize that while example methods have been discussed, a variety of other differing methods are possible based on other combinations and/or orders of method steps, and are to be understood within the context provided by this detailed description.

While the inventions are amenable to various modifications and alternative forms, specific embodiments are shown by way of example in the drawings and described in detail. It should be understood, however, that other embodiments, beyond the specific embodiments described, are possible as well. All modifications, equivalents, and alternative embodiments falling within the scope of the appended claims are covered as well.

**Claims**

1. A method for localising a cause of anomalous water flow in a water distribution network having at least one section of water main, comprising

   estimating an expected water flow rate along the or each section of water main;
   calculating an actual water flow rate along the or each section of water main from measurements of the temperature of water within the or each section of water main and measurements of the temperature of the ground surrounding the or each section of water main;
   determining an anomalous flow rate from the expected flow rate and the calculated actual water flow rate for the or each section;
   determining a lower bound for the anomalous flow rate for the or each section; and
   for each section, comparing the lower bound for the anomalous flow rate with a threshold value of flow rate to determine whether the section includes anomalous water flow or not.

2. The method of claim 1, further comprising:
   identifying a reduced search area for the cause of anomalous water flow in a water distribution network based on the or each section determined to include anomalous water flow.

3. The method of claim 1 or 2, wherein estimating an expected water flow rate along the or each section of water main includes summing the expected water flow rate for each of a plurality of water consumers connected to each section of water main.

4. The method of any of the preceding claims, wherein the actual water flow rate for each section is calculated using

$$\frac{-2\pi.\alpha.l}{\ln(R).\ln(\frac{4z}{d})}$$

where

$$R = \frac{(T_2 - T_g)}{(T_1 - T_g)},$$

and wherein $T_1$ is the upstream mains water temperature for the section, wherein $T_2$ is the downstream mains water temperature for the section, wherein $T_g$ is the downstream ground temperature for the section, I is the length of the section, $\alpha$ is the thermal diffusivity of the ground, z is the depth of the section and d is the diameter of the section.

5. The method of any of the preceding claims, wherein the anomalous flow rate is determined from the difference between the calculated actual flow rate and the estimated flow rate.

6. The method of any of the preceding claims, further comprising determining an upper bound for the anomalous flow rate.

7. The method of claim 6, wherein determining whether a section has an anomalous flow or not includes:

   determining whether the upper bound and lower bound for the anomalous flow rate both have the same sign; and whether the upper bound and the lower bound for the anomalous flow are both greater than the threshold value of flow rate.

8. The method of claim 2, wherein identifying a reduced search area further comprises:

   identifying the most downstream section that has been identified as including anomalous water flow;
   recording the start of the reduced search area as being downstream of the upstream end of the most downstream section including anomalous flow;
   identifying the next section which is downstream of the most downstream section including anomalous flow and that has been identified as not including anomalous water flow; and
   recording the end of the reduced search area as being upstream of the downstream end of the next section.

9. The method of claim 2 or 8, and further comprising assigning a confidence score to each reduced search area identified.

10. The method of claim 9 and further comprising increasing the confidence score for a reduced search area for each upstream section identified as having anomalous flow.

11. A computer readable medium storing computer program code executable by a data processor to carry out the method of any of the preceding claims.

12. A data processing device including a data processor and the computer readable medium of claim 11.

100

Identify one or more
sections of water main — 102

Install temperature logging apparatus
for each section of water main — 104

Record measured
temperature data — 106

Process measured temperature data to
determine whether cause of anomalous flow
in each section of water main — 108

FIG.1

200

```
        ┌─────────────────────────────┐
        │  Select initial search area of  │──── 202
        │   water distribution network    │
        └─────────────────────────────┘
                      │
                      ▼
        ┌─────────────────────────────┐
        │ Select logging period and flow period(s) │──── 204
        └─────────────────────────────┘
                      │
                      ▼
        ┌─────────────────────────────┐
        │ Identify demand points in initial search area │──── 206
        └─────────────────────────────┘
                      │
                      ▼
        ┌─────────────────────────────┐
        │ Divide initial search area into section(s) of water main and │──── 208
        │ identify upstream and downstream ends of each section │
        └─────────────────────────────┘
                      │
                      ▼
        ┌─────────────────────────────┐
        │ Install temperature logging apparatus at upstream │──── 210
        │   and downstream ends of each section   │
        └─────────────────────────────┘
                      │
                      ▼
        ┌─────────────────────────────┐
        │ Measure and record ground temperature at │──── 212
        │  regular intervals during each flow period  │
        └─────────────────────────────┘
                      │
                      ▼
        ┌─────────────────────────────┐
        │ Measure and record water main temperature │──── 214
        │   at regular intervals during each flow period │
        └─────────────────────────────┘
                      │
                      ▼
        ┌─────────────────────────────┐
        │  Transmit or download temperature data  │──── 216
        └─────────────────────────────┘
                      │
                      ▼
        ┌─────────────────────────────┐
        │ Process measured temperature data to │──── 218
        │ determine likelihood of cause of anomalous │
        │   flow in a section of each section   │
        └─────────────────────────────┘
                      │
                      ▼
        ┌─────────────────────────────┐
        │      Reduced search area       │──── 220
        └─────────────────────────────┘
                      │
                      ▼
        ┌─────────────────────────────┐
        │   Further investigations and/or    │──── 222
        │        remedial action         │
        └─────────────────────────────┘
```

FIG.2

300

Section 4
218

306

302

Section3
316

Reduced search
area for
anomalous flow
324

Section 2
314

320

Section 1
312

Upstream
end of main

304

310

Direction
of flow of
water

FIG.3

400

401

Cross section through boundary box

Ground surface
414

Thermal insulation
426

Boundary box lid
428

Data logger
404

Data logger
408

Temperature sensor
406

Boundary box wall
410

Thermal insulation
424

Service pipe
418

Stop tap
422

Thermal insulation
416

Temperature sensor
402

420

Lowest point on boundary box wall
412

Ground around boundary box

FIG.4

230

Calculate expected water flow rate (Qe) for each section for flow period during logging period — 232

Estimate ground temperature from measured ground temperature data — 234

Estimate water temperature from measured water main temperature data — 236

Determine minimum anomalous flow rate threshold (Qi) for each section for each flow period — 238

Calculate water flow rate (Qc) for each section for each flow period — 240

Calculate anomalous flow Qa = Qc - Qe for each section for each flow period — 242

Calculate likely max (Qa _max) and min (Qa _min) values of anomalous flow for each section for each flow period — 244

Identify which section have anomolous flow using Qa _ max and Qa _ min — 246

Define reduced search area(s) from sections identified as having anomalous flow — 248

Determine confidence score of reduced search area(s) from upstream sections identified as having anomalous flow — 250

Add confidence scores of each reduced search area(s) for each flow period and rank reduced search areas by total confidence score — 252

FIG.5

600

Cross section through temporary chambers
for temperature measurements

606

**Lid** 630

**Lid** 610

612

**Data logger** 636

**Data logger** 616

632

**Temporary or permanent chamber** 626

**Temporary or permanent chamber**

**Thermal insulation** 638

**Thermal insulation** 618

Water main

**Temperature sensor** 634

1 to 5 metres

602

604

**Temperature sensor** 614

Ground around the water main

FIG.6

700

Cross section through temporary chambers
for temperature measurements

**FIG.7**

Upstream end of section of main (A)
**802**

812

**800**

Length of section of main

816

Downstream end of section of main (B) with dead end
**804**

814

818

810

Main feeding the section

806

Initial search area
**808**

Key
—○— Service connection
—●— Service connection where boundary box has temperature monitored
——— Section of main
▶ Direction of flow of water
⊘ Meter

FIG.8

EP 4 180 790 A1

830

FIG.9

840

FIG.10

FIG.11

**Key**
—o— Service connection
—●— Service connection where boundary box has temperature monitored
——— Section of main
►  Direction of flow of water
∅  Meter

FIG.12

FIG.13

FIG.14a

— Actual ground temperature —902
-- Actual water temperature —904
□ Measured ground temperature —908
▲ Measured water temperature —906

FIG.14b

● Measured flow at meter —912
— Actual flow in main —914
-- Calculated flow from temperature measurements (Qc) —916
— Expected flow from known demands (Qe) —910
··· Minimum anomalous flow in the pipe section (Qa_min) —920
— — Maximum anomalous flow in the pipe section (Qa_max) —918

FIG.14c

··· Minimum anomalous flow in the pipe section (Qa_min) —920
— — Maximum anomalous flow in the pipe section (Qa_max) —918
⌷ Minimum anomalous flow of interest (Qi) —922

EP 4 180 790 A1

860

Meter at upstream end and location where water temperature and ground temperature are monitored

Section 1
862

880

Direction of flow of water

A -Location of customer demand at end of section 1. Ground and water temperature measured here
872

Section 2
864

B -Location of customer demand at end of section 2. Ground and water temperature measured here
874

Section 3
866

876

Section 4
868

878

Dead end

D -Location of customer demand at end of section 4. Ground and water temperature measured here

C -Location of customer demand at end of section 3. Ground and water temperature measured here. Also location of additional customer demand
884

Initial search area for demand

Reduced search area for Idemand

A

B

C

D

942

944

946

940

Flow rate (l/s)

Distance along main (metres)

· · · · · Minimum anomalous flow in the pipe section (Qa_min)
942

— — — Maximum anomalous flow in the pipe section (Qa_max)
944

Minimum anomalous flow of interest (Qi)

FIG.15

Meter at upstream end and location where water temperature and ground temperature are monitored

Section 1 **862**

Section 2 **864**

B -Location of customer demand at end of section 2. Ground and water temperature measured here

860

Unknown connection to neighbouring network at lower pressure **888**

Section 3 **866**

Section 4 **868**

880

Direction of flow of water

A -Location of customer demand at end of section 1. Ground and water temperature measured here **872**

D -Location of customer demand at end of section 4. Ground and water temperature measured here **878**

C -Location of customer demand at end of section 3. Ground and water temperature measured here. Also location of additional customer demand **884**

950

Flow rate (l/s)

Initial search area for unknown connection

Reduced search area for unknown connection

956

A    B    C    D

952

954

Minimum anomalous flow in the pipe section (Qa_min) 952

Maximum anomalous flow in the pipe section (Qa_max)

Minimum anomalous flow of interest (Qi) 954

Distance along main (metres)

FIG.16

EP 4 180 790 A1

Europäisches
Patentamt

European
Patent Office

Office européen
des brevets

# EUROPEAN SEARCH REPORT

**Application Number**

**EP 22 21 4376**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/356665 A1 (FELEMBAN EMAD [SA] ET AL) 8 December 2016 (2016-12-08) * abstract * * paragraph [0077] * * paragraph [0055] * * paragraph [0078] * * paragraph [0088] * * paragraph [0028] * * paragraph [0034] * * paragraph [0052] * * figures 2B, 4, 14 * | 1-12 | INV. G01M3/00 G01M3/28 G01F1/68 G01F1/684 |
| X | US 2010/206386 A1 (CRUCS KEVIN M [US]) 19 August 2010 (2010-08-19) * figures 1, 2, 4 * * paragraph [0004] * * paragraph [0027] * * paragraph [0022] * * paragraph [0019] – paragraph [0020] * | 1-12 | |
| A | WO 2016/124931 A1 (INVENIO SYSTEMS LTD [GB]; TOOMS MOORE CONSULTING LTD [GB] ET AL.) 11 August 2016 (2016-08-11) * figure 1 * * page 28, line 8 – line 20 * * page 6, line 10 – line 11 * * page 19, line 4 – line 6 * * page 19, line 20 * * page 36 – page 37 * * page 28 – page 29 * * page 49, line 9 – line 18 * | 1-12 | TECHNICAL FIELDS SEARCHED (IPC) G01F G01M |
| A | GB 2 546 018 A (FLOWGEM LTD [GB]) 5 July 2017 (2017-07-05) * figure 1 * | 1-12 | |

-/--

The present search report has been drawn up for all claims

| Place of search | Date of completion of the search | Examiner |
|---|---|---|
| The Hague | 11 April 2023 | Régert, Tamás |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 22 21 4376**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 308 746 A (COVINGTON MORRIS T) 5 January 1982 (1982-01-05) * figure 1 * ----- | 1-12 | |
| A | US 2014/348205 A1 (SHAW SCOTT [US] ET AL) 27 November 2014 (2014-11-27) * figures 1, 2 * ----- | 1-12 | |

TECHNICAL FIELDS
SEARCHED        (IPC)

The present search report has been drawn up for all claims

| Place of search | Date of completion of the search | Examiner |
|---|---|---|
| The Hague | 11 April 2023 | Régert, Tamás |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 4376

11-04-2023

| Patent document cited in search report | | Publication date | Patent family member(s) | | Publication date |
|---|---|---|---|---|---|
| US 2016356665 | A1 | 08-12-2016 | NONE | | |
| US 2010206386 | A1 | 19-08-2010 | CA | 2750119 A1 | 26-08-2010 |
| | | | EP | 2399081 A2 | 28-12-2011 |
| | | | US | 2010206386 A1 | 19-08-2010 |
| | | | WO | 2010096287 A2 | 26-08-2010 |
| WO 2016124931 | A1 | 11-08-2016 | AU | 2016214124 A1 | 28-09-2017 |
| | | | CA | 2975757 A1 | 11-08-2016 |
| | | | CN | 107636440 A | 26-01-2018 |
| | | | EP | 3254076 A1 | 13-12-2017 |
| | | | GB | 2537013 A | 05-10-2016 |
| | | | US | 2018031439 A1 | 01-02-2018 |
| | | | WO | 2016124931 A1 | 11-08-2016 |
| GB 2546018 | A | 05-07-2017 | GB | 2536364 A | 14-09-2016 |
| | | | GB | 2545830 A | 28-06-2017 |
| | | | GB | 2546018 A | 05-07-2017 |
| US 4308746 | A | 05-01-1982 | NONE | | |
| US 2014348205 | A1 | 27-11-2014 | US | 2014348205 A1 | 27-11-2014 |
| | | | US | 2017138022 A1 | 18-05-2017 |

EPO FORM P0459

For more details about this annex : see Official Journal of the European Patent Office, No. 12/82